# EUROPÄISCHE PATENTSCHRIFT

(11) **EP 1 676 628 B1**
(45) Veröffentlichungstag und Bekanntmachung des Hinweises auf die Patenterteilung: **07.10.2009**
(21) Anmeldenummer: 04030997.3
(22) Anmeldetag: 30.12.2004
(51) Int. Cl.: B01F 5/00, F01N 3/20, F04B 13/00, F04B 43/02

(54) **Dosierpumpenaggregat**
Dosing pump unit
Unité de pompe de dosage

(43) Veröffentlichungstag der Anmeldung: 05.07.2006
(73) Patentinhaber: Grundfos NoNox a/s, 8850 Bjerringbro (DK)
(72) Erfinder: Jochumsen, Hans Henrik, 3450 Allerod (DK); Frederiksen, Niels, 2720 Vanlose (DK); Lindberg, Karim, 3670 Vekso (DK); Torp Madsen, Niels, 3460 Birkerod (DK); Johansen, Tom, 25443 Helsingborg (SE)
(74) Vertreter: Hemmer, Arnd

(56) Entgegenhaltungen:
- EP-A- 1 435 458
- WO-A-00/79108
- WO-A-02/25074
- US-A1- 2004 115 074

## Beschreibung

Die Erfindung betrifft ein Dosierpumpenaggregat zum Zumischen eines flüssigen Reduktionsmittels in einem Abgasstrom.

Bei selbstzündenden Brennkraftmaschinen entstehen beim Betrieb mit Sauerstoffüberschuss, was in der Vielzahl der Betriebszustände der Fall ist, Stickoxyde, und zwar insbesondere bei Direkteinspritzung in den Hauptbrennraum, wie dies typischerweise bei Dieselmotoren der Fall ist. Um diese Stickoxyd-Emmissionen zu verringern, ist es bekannt, den Abgasstrom einen Reduktionskatalysator zuzuführen. Als Reduktionsmittel wird dabei üblicherweise eine wässrige Harnstofflösung dem Abgas vor Eintritt in den Katalysator fein verteilt zugeführt. Dabei ist die zugeführte Harnstoffmenge möglichst exakt auf den Verbrennungsprozess abzustimmen, um eine möglichst vollständige Reduktion innerhalb des Katalysators zu gewährleisten und andererseits ein Harnstoffüberschuss zu vermeiden.

Zur Dosierung und Zuführung des Reduktionsmittels zu dem Abgasstrom ist aus EP 1 435 458 A1 ein spezielles Dosierpumpenaggregat bekannt. Bei diesem Dosierpumpenaggregat wird das zugeführte Reduktionsmittel im Dosierpumpenaggregat vor der Zuführung zu dem Abgasstrom mit Druckluft gemischt bzw. beaufschlagt. Das bekannte Dosierpumpenaggregat weist nach außen hin vier Anschlüsse, nämlich für eine Saugleitung, für eine Rücklaufleitung, für eine Druckluftzufuhr sowie für die Leitung zu einer Einspritzdüse im Abgassystem auf. Alle wesentlichen Komponenten zum Betrieb der Dosierpumpe und der Vormischeinrichtung zum Mischen des Reduktionsmittels mit Druckluft sind in das Dosierpumpenaggregat integriert.

US 2004/0115074 A1 offenbart ein Dosierpumpenaggregat zum Zuführen und Mischen eines Reduktionsmittels mit Luft für eine Abgasnachbehandlung in einem Fahrzeug. Das Dosierpumpenaggregat weist eine Membranpumpe zum Fördern des Reduktionsmittels sowie eine Mischkammer, in welcher das geförderte Reduktionsmittel mit Luft gemischt wird auf. Ferner sind an der Membranpumpe erforderliche Rückschlagventile angeordnet. Diese Bauteile sind in mehrere zusammengesetzte Gehäuseteile integriert. Das heißt, zur Montage der einzelnen Elemente müssen mehrere Gehäuseteile zusammengefügt werden. Hier ist es wünschenswert, die Montage zu vereinfachen

Es ist Aufgabe der vorliegenden Erfindung, eine möglichst montagefreundliche und einfach aufgebaute Anordnung der hydraulischen Komponenten und des hydraulischen Kreislaufes eines Dosierpumpenaggregates zu schaffen.

Diese Aufgabe wird durch ein Dosierpumpenaggregat mit den im Anspruch 1 angegebenen Merkmalen gelöst. Bevorzugte Ausführungsformen ergeben sich aus den zugehörigen Unteransprüchen, der Beschreibung sowie den Figuren.

Das erfindungsgemäße Dosierpumpenaggregat weist als wesentliche Komponente eine Dosierpumpe zur dosierten Förderung des Reduktionsmittels auf. Durch die Ansteuerung der Dosierpumpe kann die Menge des geförderten Reduktionsmittels, welches dem Abgasstrom zugeführt, eingestellt werden. Die Dosierpumpe kann beispielsweise als Kolben- oder Membranpumpe ausgebildet sein, wobei durch Variation der Anzahl der Pumpenhübe in einem bestimmten Zeitintervall und/oder der Hubgeschwindigkeit die geförderte Reduktionsmittelmenge exakt eingestellt bzw. dosiert werden kann. Ferner weist das Dosierpumpenaggregat eine Vormischeinrichtung auf, in welcher das geförderte Reduktionsmittel mit Druckgas, insbesondere Druckluft beaufschlagt bzw. gemischt wird. Dabei muss keine fein verteilte Mischung des Reduktionsmittels in dem Druckgasstrom erreicht werden, vielmehr ist es ausreichend, dass das Reduktionsmittel, beispielsweise in Form größerer Tropfen, in dem Druckgasstrom zu einer Einspritzdüse in dem Abgasstrom transportiert wird. Bei der Einspritzung in den Abgasstrom kommt es dann vorzugsweise zu einer feineren Verteilung des Reduktionsmittels. Der erfindungsgemäß einfache Aufbau des Dosierpumpenaggregates wird dadurch erreicht, dass das Dosierpumpenaggregat einen Pumpenkopf aufweist, in dem die Komponenten des hydraulischen Kreislaufes angeordnet sind. Dabei weist der Pumpenkopf eine Zentralplatte auf, in welcher zumindest die Dosierpumpe und die Vormischeinrichtung angeordnet sind. Auf diese Weise werden die Dosierpumpe, beispielsweise in Form einer Membranpumpe, und die Vormischeinrichtung in einem Bauteil, nämlich der Zentralplatte integriert, wodurch die Zahl der zu montierenden Einzelteile reduziert und die Montage vereinfacht wird. Beispielsweise kann ein Pumpenkolben in einer Ausnehmung in der Zentralplatte geführt sein oder die Membran einer Membranpumpe an der Zentralplatte angebracht sein.

Besonders bevorzugt ist zumindest ein Abschnitt eines Druckkanals bzw. einer Druckleitung von der Dosierpumpe zu der Vormischeinrichtung in und/oder an der Zentralplatte ausgebildet. Auf diese Weise wird eine integrale Verbindung zwischen der Dosierpumpe und der Vormischeinrichtung in der Zentralplatte geschaffen, so dass keine separat zu montierenden Leitungsverbindungen erforderlich sind. Der Druckkanal kann in Form von Durchgangslöchern in der Zentralplatte, welche sich von der einen Oberfläche zur entgegengesetzten Oberfläche erstrecken und/oder in Form von Kanälen entlang einer oder beider Oberflächen ausgebildet sein. Durch angrenzende Plattenelemente werden die in der Oberfläche ausgebildeten Kanäle nach außen verschlossen.

Bevorzugt liegt die Zentralplatte mit einer ersten Oberfläche an einer Anlagefläche einer Frontplatte eines Antriebsgehäuses des Dosierpumpenaggregates an, wobei die Frontplatte vorzugsweise an ihrer der Zentralplatte abgewandten Seite den Antrieb der Dosierpumpe trägt. Im Antriebsgehäuse des Dosierpumpenaggregates ist der Antriebsmotor und beispielsweise ein Kurbeltrieb für den Antrieb der Pumpmembran einer Membranpumpe angeordnet. Ferner kann die erforderliche Steuerelektronik im Inneren des Antriebsgehäuses angeordnet sein. Bevorzugt ist der gesamte Antrieb an der der Zentralplatte abgewandten Seite der Frontplatte befestigt, so dass nach Montage des Antriebs an der Frontplatte der gesamte Antrieb in das Antriebsgehäuse eingeschoben werden kann, welches dann durch die Frontplatte nach au-βen verschlossen wird. Es sind dabei keine weiteren Befestigungen des Antriebs oder dessen Komponenten im Inneren des Antriebsgehäuses erforderlich. Vorzugsweise sind auch sämtliche elektrische und hydraulische Anschlüsse an der Frontplatte vorgesehen, so dass das übrige Antriebsgehäuse einfach als Kappe ausgebildet werden kann, welche mit ihrer offenen Seite an der Frontplatte angebunden wird. Dadurch, dass die Zentralplatte mit ihrer ersten Oberfläche an der Frontplatte des Antriebsgehäuses plan anliegt, können in der ersten Oberfläche der Zentralplatte als Nuten ausgebildete Kanäle durch die Frontplatte verschlossen werden, so das zwischen der Frontplatte und der ersten Oberfläche der Zentralplatte geschlossene Leitungsverbindungen ausgebildet werden können. Bevorzugt werden hierzu Dichtungselemente zwischen der Frontplatte und der ersten Oberfläche der Zentralplatte angeordnet. Sofern die Kanäle in der ersten Oberfläche der Zentralplatte zur Leitung des Reduktionsmittels dienen, werden diese zu der Frontplatte hin besonders bevorzugt vollständig durch ein zwischen Frontplatte und Zentralplatte eingelegtes Dichtungselement verschlossen oder abgedeckt, so dass die Frontplatte selber nicht mit dem Reduktionsmittel in Kontakt kommt. Dies hat den Vorteil, dass die Frontplatte nicht resistent gegen das Reduktionsmittel ausgebildet werden muss.

An einer zweiten, vorzugsweise dem Antrieb der Dosierpumpe abgewandten Oberfläche der Zentralplatte liegt weiter bevorzugt eine Stirnplatte an. Diese Stirnplatte deckt die zweite Oberfläche der Zentralplatte ab, wobei sie in der zweiten Oberfläche als Nuten ausgebildete Kanäle verschließt, so dass zwischen der Stirnplatte und der zweiten Oberfläche der Zentralplatte Leitungsverbindungen ausgebildet werden können. Wie auch zwischen der Stirnplatte und der ersten Oberfläche der Zentralplatte sind vorzugsweise auch zwischen der zweiten Oberfläche der Zentralplatte und der Stirnplatte Dichtungselemente zur Abdichtung der ausgebildeten Kanäle angeordnet. Besonders bevorzugt ist die Zentralplatte zwischen einer Fronplatte des Antriebsgehäuses und der Stirnplatte angeordnet. Das heißt, die Zentralplatte liegt mit ihrer ersten Oberfläche an der Frontplatte des Antriebsgehäuses an und die zweite entgegengesetzte Oberfläche der Zentralplatte wird durch die Stirnplatte überdeckt. Bevorzugt sind Bolzen vorgesehen, welche die Stirnplatte an der Frontplatte des Antriebsgehäuses fixieren und dabei die Zentralplatte zwischen Stirnplatte und Frontplatte einklemmen, so dass die Stirnplatte, die Zentralplatte und die Frontplatte des Antriebsgehäuses dichtend in Anlage gehalten werden.

Wie erläutert, sind zwischen der ersten Oberfläche der Zentralplatte und der Frontplatte und/oder zwischen der zweiten Oberfläche der Zentralplatte und der Stirnplatte Fluidkanäle für die Führung des Reduktionsmittels und/oder des Druckgases ausgebildet. Dabei können zusätzlichen Verbindungen zwischen Kanälen an der ersten Oberfläche und an der zweiten Oberfläche in Form Durchgangslöchern durch die Zentralplatte ausgebildet sein. Durch diese Anordnung ist es möglich sämtliche Verbindungen zwischen der Dosierpumpe und der Vormischeinrichtung sowie Anschlüssen zu einem Reduktionsmitteltank, zu einer Druckgaszufuhr und/oder zu einer Einspritzdüse im Abgassystem im Inneren der Zentralplatte bzw. an deren Oberfläche auszubilden. Auf diese Weise werden separat zu montierende Leitungsverbindungen vermieden, vielmehr können alle wesentlichen Komponenten des hydraulischen Kreises in oder an der Zentralplatte angeordnet werden und die erforderlichen Verbindungskanäle integral an oder in der Zentralplatte ausgebildet sein. Die Zentralplatte kann als Metallteil oder vorzugsweise als Spritzgussteil aus Kunststoff gefertigt werden.

Ferner sind in der Stirnplatte vorzugsweise die Anschlüsse für die Reduktionsmittelzufuhr, d. h. die Saugleitung der Dosierpumpe, eine Rücklaufleitung zu dem Reduktionsmitteltank, eine Druckluftzufuhr und/oder für eine Leitung zu einer Einspritzdüse im Abgassystem ausgebildet. Die Anschlüsse in der Stirnplatte stehen an der Schnittstelle der Stirnplatte zu der Zentralplatte mit den in der Zentralplatte ausgebildeten Fluid- bzw. Druckgaskanälen in Verbindung. So können durch Montage der Stirnplatte alle Anschlüsse des Dosierpumpenaggregates gleichzeitig mit dem hydraulischen bzw. pneumatischen System in der Zentralplatte in Verbindung gebracht werden, was eine einfache Montage des Dosierpumpenaggregates ermöglicht.

Weiter bevorzugt ist die Dosierpumpe als Membranpumpe ausgebildet und weist die Zentralplatte an ihrer ersten Oberfläche eine das Pumpvolumen definierende Ausnehmung auf, welche an der ersten Oberfläche durch die Pumpmembran verschlossen wird. Das heißt, die Membran wird in eine Ausnehmung an der ersten Oberfläche der Zentralplatte, welche dem Antriebsgehäuse des Dosierpumpenaggregates zugewandt ist, eingelegt und ist an ihrer der Zentralplatte abgewandten Seite zu ihrer Bewegung mit dem Antrieb, d. h. beispielsweise mit einem Exzenter- oder Kurbeltrieb verbunden, welcher die Membran auf die Zentralplatte zu und von dieser weg bewegt, wodurch das Pumpvolumen vergrößert und verkleinert wird und ein Fördern des Reduktionsmittel durch das Pumpvolumen erreicht wird.

Die Membranpumpe ist weiter bevorzugt so ausgebildet, dass im Bereich der Ausnehmung in der Zentralplatte zumindest ein sich zu der entgegengesetzten zweiten Oberfläche der Zentralplatte erstreckendes Durchgangsloch ausgebildet ist. Dieses Durchgangsloch bildet entweder die Saugleitung oder Druckleitung zu dem Pumpvolumen. Besonders bevorzugt sind zwei Durchgangslöcher vorgesehen, eines welches die Saugleitung bildet und eines welches die Druckleitung bzw. den Druckkanal bildet. Eine solche Anordnung könnte beispielsweise auch für eine Kolbenpumpe Verwendung finden.

In dem Durchgangsloch oder den Durchgangslöchern, welche von der zweiten Oberfläche zu der Ausnehmung in der ersten Oberfläche führen ist, vorzugsweise jeweils ein Rückschlagventil angeordnet. Bei einer Kolben- oder Membranpumpe sind Rückschlagventile erforderlich, um einen Pumpvorgang zu erreichen. Dabei sind die beiden Rückschlagventile so angeordnet, dass sie in derselben Strömungsrichtung, d. h. der Förderrichtung der Dosierpumpe öffnen. Vorzugsweise sind beide für den Betrieb der Dosierpumpe erforderliche Rückschlagventile jeweils in einem Durchgangsloch der Zentralplatte angeordnet. Das erste Rückschlagventil verschließt die Saugleitung während des Pumphubes, das zweite Rückschlagventil verschließt die Druckleitung beim Ansaugen, so dass kein gefördertes Reduktionsmittel aus der Druckleitung in das Pumpvolumen zurückströmen kann. Durch die Anordnung der Rückschlagventile in den Durchgangslöchern, werden die Rückschlagventile in die Zentralplatte integriert, wodurch ein kompakter Aufbau und eine einfache Montage erreicht wird.

Ein sich im Bereich der Ausnehmung zu der entgegengesetzten zweiten Oberfläche erstreckendes Durchgangsloch bildet bevorzugt einen ausgangsseitigen an die Dosierpumpe anschließenden Druckkanal, welcher mit der Vormischeinrichtung sowie einem in der Zentralplatte angeordneten Rücklaufventil verbunden ist. Über den Druckkanal bzw. die Druckleitung gelangt das von der Dosierpumpe geförderte Reduktionsmittel zu der Vormischeinrichtung, welche ebenfalls in die Zentralplatte integriert ist und in welcher das Reduktionsmittel mit Druckluft gemischt wird. Ferner ist der Druckkanal auch mit einem Rücklaufventil verbunden, welches eine Rücklaufleitung bzw. einen Rücklaufkanal wahlweise verschließt oder freigibt. Der Rücklaufkanal steht mit einem Anschluss zur Anbindung an den Reduktionsmitteltank in Verbindung, so dass von der Dosierpumpe gefördertes Reduktionsmittel über den Rücklaufkanal zurück in den Reduktionsmitteltank gepumpt werden kann. So kann durch Öffnen des Rücklaufventils bei Inbetriebnahme des Dosierpumpenaggregates zunächst sichergestellt werden, dass die Dosierpumpe und der sich an diese anschließende Druckkanal zunächst vollständig mit Reduktionsmittel gefüllt werden. Da auch das Rücklaufventil in die Zentralplatte integriert ist, wird der Aufbau weiter vereinfacht.

Besonders bevorzugt ist das Rücklaufventil durch Druckgas betätigbar und über einen in der Zentralplatte und /oder an zumindest einer Oberfläche der Zentralplatte ausgebildeten Strömungsweg mit einem Druckgaseingang verbunden. Auf diese Weise kann auf elektrische Betätigungsmittel zum Betätigen des Rücklaufventils verzichtet werden, vielmehr ist es möglich die Betätigung allein durch die Hydraulik- bzw. Pneumatikkreise im Inneren der Zentralplatte zu bewirken. Dazu ist die Betätigungsleitung, zur Druckbeaufschlagung des Rücklaufventils vollständig in oder an der Zentralplatte in Form von Durchgangslöchern oder von in der Oberfläche ausgebildeten Nuten realisiert.

Das Rücklaufventil ist vorzugsweise in eine an der zweiten Oberfläche der Zentralplatte, d. h. der dem Antriebsgehäuse abgewandten Oberfläche, ausgebildete Ausnehmung eingesetzt und vorzugsweise als Membranventil ausgebildet. Das heißt, es kann eine Membran vorgesehen sein, welche mit Druckluft oder Druckgas beaufschlagt wird und dadurch so bewegt wird, dass sie einen Strömungsdurchgang, beispielsweise eine Öffnung in der Zentralplatte verschließt oder freigibt, so dass der Rücklaufkanal zu dem Reduktionsmitteltank geöffnet oder geschlossen wird.

Zweckmäßigerweise ist die Vormischeinrichtung über einen in der Zentralplatte und/oder an zumindest einer Oberfläche der Zentralplatte ausgebildeten Strömungsweg mit einem Druckgaseingang verbunden. So wird auch die Druckgaszufuhr zu der Vormischeinrichtung in die Zentralplatte integriert.

Weiter bevorzugt ist an der Zentralplatte oder einer an einer der Oberflächen der Zentralplatte anliegenden Platte, d. h. beispielsweise der Stirnplatte oder einer Frontplatte des Antriebsgehäuses, ein Druckgaseingang ausgebildet ist, welcher mit einem Schaltventil zum Öffnen und Schließen des Druckgaseinganges verbunden ist. Dabei kann das Schaltventil ebenfalls in die Zentralplatte integriert sein oder aber in oder an einer an der Zentralplatte anliegenden Platte ausgebildet sein. Der Druckgaseingang bildet besonders bevorzugt einen zentralen Druckgaseingang, so dass durch das Schaltventil die gesamte Druckgaszufuhr für das Dosierpumpenaggregat freigegeben oder abgeschaltet werden kann. Insbesondere sind mit dem zentralen Druckgaseingang sowohl die Vormischeinrichtung als auch das druckgasbetätigte Rücklaufventil verbunden, so dass durch Betätigung des Schaltventils sowohl die Druckgaszufuhr zu der Vormischeinrichtung freigegeben als auch das Rücklaufventil betätigt werden können.

Der Druckkanal steht vorzugsweise mit einem in der Zentralplatte angeordneten Drucksensor in Verbindung. Der Drucksensor kann elektrisch, aber auch hydraulisch, pneumatisch oder mechanisch wirken und den Fluiddruck in dem Druckkanal erfassen. Bevorzugt werden in Abhängigkeit des Ausgangssignals des Drucksensors ein Schaltventil für die Druckluftversorgung und/oder das Rücklaufventil in einem Reduktionsmittelrücklauf zu dem Reduktionsmitteltank betätigt. Da die Regel- bzw. Steuerungselektronik des Dosierpumpenaggregates vorzugsweise im Inneren des Antriebsgehäuses geschützt angeordnet ist, ist der Drucksensor in der Zentralplatte bevorzugt so angeordnet, dass die elektrischen Anschlussleitungen des Drucksensors an der dem Antriebsgehäuse zugewandten Oberfläche aus der Zentralplatte austreten und so direkt in das Innere des Antriebsgehäuses geführt werden können. Vorzugsweise ist in der Frontplatte des Antriebsgehäuses eine Ausnehmung ausgebildet, durch welche der Drucksensor von der dem Inneren des Antriebsgehäuses zugewandten Seite der Frontplatte her in diese und die an die Frontplatte angesetzte Zentralplatte eingesetzt werden kann. So kann auch der Drucksensor allein an der Frontplatte des Antriebsgehäuses montiert werden, so dass keine Anbindung an weitere Gehäuseteile erforderlich ist.

Weiter bevorzugt weist die Zentralplatte, vorzugsweise an der einem Antriebsgehäuse zugewandten Oberfläche, eine Ausnehmung für ein Heizelement auf. So können die hydraulischen Komponenten im Inneren der Zentralplatte beheizt werden, um bei niedrigen Temperaturen ein Einfrieren des Reduktionsmittels in dem Dosierpumpenaggregats zu verhindern. Vorzugsweise ist die Zentralplatte aus Metall ausgebildet, so dass sie die von dem Heizelement erzeugte Wärme gut zu allen Teilen des hydraulischen Systems des Dosierpumpenaggregates leitet. Auch die elektrischen Anschlüsse des Heizelementes sind vorzugsweise aus der Zentralplatte direkt durch die Frontplatte des Antriebsgehäuses in dessen Inneres geführt, so dass Sie dort mit den elektrischen Anschlusselementen bzw. einer Steuerung des Dosierpumpenaggregates verbunden werden können.

Bei der beschriebenen Anordnung sind die Bewegungsrichtungen sämtlicher beweglicher Ventilelemente, welche in der Zentralplatte angeordnet sind, bevorzugt parallel zueinander und vorzugsweise parallel zu der Bewegungsrichtung einer Pumpmembran ausgerichtet. Diese Ventilelemente sind beispielsweise die Rückschlagventile vor und hinter der Dosierpumpe, Rückschlagventile in der Druckleitung vor der Vormischeinrichtung, in der Druckgaszufuhr zu der Vormischeinrichtung und/oder das Rücklaufventil. Die Bewegungsrichtung erstreckt sich bevorzugt quer zu der ersten und zweiten Oberfläche der Zentralplatte, so dass die Ventilelemente in ihrer Bewegungsrichtung in Ausnehmungen der Zentralplatte eingesteckt werden können. Dies ermöglicht eine einfache Montage und einen kompakten Aufbau der Zentralplatte mit den darin angeordneten Ventilelementen.

Die Vormischeinrichtung weist vorzugsweise ein eine Mischkammer definierendes Gehäuseteil auf, welches in eine Ausnehmung an einer, vorzugsweise einem Antrieb der Dosierpumpe abgewandten Oberfläche, der Zentralplatte eingesetzt ist. Dieses ist die Seite, welche vorzugsweise einer Stirnplatte, in welcher die Anschlüsse zum Anschluss des Dosierpumpenaggregates ausgebildet sind, zugewandt ist. So kann die zu dem Abgassystem führende Leitung, durch welche das Reduktionsmittel-/Druckgas-Gemisch von dem Dosierpumpenaggregat weggeleitet wird, direkt der Vormischeinrichtung zugewandt sein.

Wenn in der vorangehenden Beschreibung ausgeführt ist, dass Fluidkanäle insbesondere für Reduktionsmittel und Druckgas in den Oberflächen der Zentralplatte ausgebildet sind, so ist dies so zu verstehen, dass die Kanäle insbesondere zwischen den Oberflächen der Zentralplatte und den angrenzenden Plattenelementen ausgebildet sind. Das heißt, die die Kanäle definierenden Nuten können ganz oder teilweise auch in den an der Zentralplatte anliegenden Plattenelementen ausgebildet sein.

Nachfolgend wird die Erfindung beispielhaft anhand der beigefügten Figuren beschrieben. In diesen zeigt:
- Fig. 1: einen Schaltplan der hydraulischen Komponenten eines erfindungsgemäßen Dosierpumpenaggregates,
- Fig. 2: in einem geschnittenen Ausschnitt die Vormischeinrichtung eines Dosierpumpenaggregates gemäß Fig. 1,

- Fig. 3: in separater Schnittansicht die Vormischeinrichtung gemäß Fig. 2 mit geschlossenen Rückschlagventilen,
- Fig. 4: die Vormischeinrichtung gemäß Fig. 3 mit geöffneten Rückschlagventil für die Druckgaszufuhr,
- Fig. 5: die Vormischeinrichtung gemäß Figuren 3 und 4 mit geöffneten Rückschlagventil für die Reduktionsmittelzufuhr und geöffneten Rückschlagventil für die Druckgaszufuhr,
- Fig. 6: eine Schnittansicht des Absperrventils in der Rücklaufleitung im geschlossenen Zustand,
- Fig. 7: eine Schnittansicht des Absperrventils gemäß Fig. 6 im geöffneten Zustand,
- Fig. 8: eine Explosionsansicht des Pumpenkopfes des anhand von Fig. 1 bis 6 beschriebenen Pumpenaggregates,
- Fig. 9: eine Draufsicht auf die dem Antriebsgehäuse zugewandte Oberfläche der Zentralplatte,
- Fig. 10: eine Schnittansicht der Zentralplatte entlang der Linie X-X in Fig. 9,
- Fig. 11: eine Draufsicht auf die dem Antriebsgehäuse abgewandten Oberfläche der Zentralplatte und
- Fig. 12: eine Schnittansicht der Zentralplatte entlang der Linie XII-XII in Fig. 11.

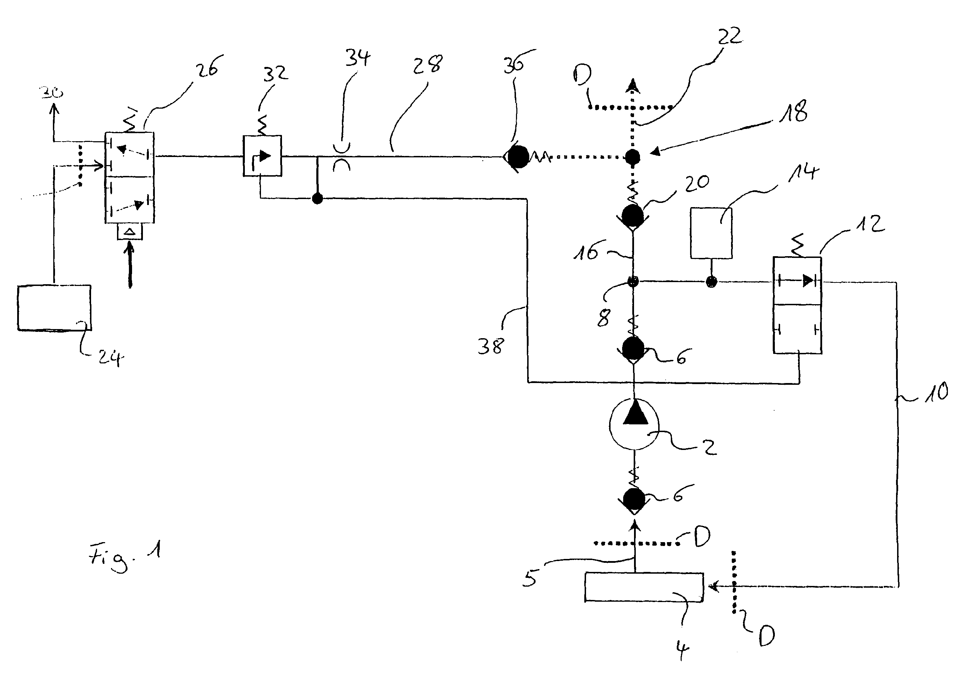

Zunächst wird die grundlegende Funktion eines Ausführungsbeispieles eines erfindungsgemäßen Dosierpumpenaggregates anhand des Schaltplans in Fig. 1 beschrieben.

Kernstück des Dosierpumpenaggregates ist eine Dosierpumpe 2, welche als Membranpumpe ausgebildet ist, mit einem zugehörigen Antrieb. Durch Steuerung des Antriebs und insbesondere Steuerung der Anzahl von Pumpenhüben kann die Menge des von der Dosierpumpe 2 geförderten Reduktionsmittels eingestellt werden, um die Reduktionsmittelmenge exakt an den Bedarf aufgrund des aktuell ablaufenden Verbrennungsprozesses im Motor anpassen zu können. Als Reduktionsmittel wird vorzugsweise eine wässrige Harnstofflösung verwendet. Das Reduktionsmittel wird in einem Reduktionsmitteltank 4 vorgehalten, aus dem es über eine Saugleitung 5 durch die Dosierpumpe 2 angesaugt wird. Im gezeigten Beispiel ist vor und hinter der Dosierpumpe 2 in bekannter Weise jeweils ein Rückschlagventil 6 angeordnet, welche wesentlicher Bestandteil der Membranpumpe sind. So stellt das in Strömungsrichtung vor der Pumpe gelegene Rückschlagventil 6 sicher, dass beim Pumphub das Reduktionsmittel nicht zurück in den Reduktionsmitteltank 4 gefördert wird. Das in Strömungsrichtung hinter der Dosierpumpe 2 liegende Rückschlagventil 6 stellt umgekehrt sicher, dass beim Ansaugen nur Reduktionsmittel aus dem Reduktionsmitteltank 4 angesaugt wird und nicht aus der Druckleitung zurückgesaugt wird.

Hinter der Dosierpumpe 2 und dem zweiten Rückschlagventil 6 zweigt an einem Verzweigungspunkt 8 eine Rücklaufleitung 10 ab, welche zurück zu dem Reduktionsmitteltank 4 führt und zur Entlüftung des Systems bei Inbetriebnahme der Dosierpumpe 2 dient.

In der Rücklaufleitung 10 ist ein Unterbrechungs- bzw. Absperrventil 12 angeordnet, durch welches die Rücklaufleitung 10 verschlossen werden kann, so dass durch die Rücklaufleitung 10 kein Reduktionsmittel zu dem Reduktionsmitteltank 4 zurückfließen kann. Im gezeigten Ruhezustand befindet sich das Absperrventil 12 in der geöffneten Stellung, in welcher die Rücklaufleitung 10 freigegeben ist. In der Rücklaufleitung 10 ist in Strömungsrichtung vor dem Absperrventil 12 und hinter dem Verzweigungspunkt 8 ein Drucksensor 14 angeordnet, welcher den Fluiddruck vor dem Absperrventil 12 und somit in der Druckleitung 16 hinter der Dosierpumpe 2 erfasst.

Die Druckleitung 16 führt von der Dosierpumpe 2 über den Verzweigungspunkt 8 zu dem Mischbereich bzw. der Mischkammer 18 einer Vorrichtungseinrichtung, in welcher das Reduktionsmittel mit Druckgas, in diesem Fall Druckluft, beaufschlagt bzw. gemischt wird. Direkt vor dem Mischbereich 18 ist in der Druckleitung 16, d. h. am Ende der Druckleitung 16 ein Rückschlagventil 20 angeordnet, welches durch Vorspannung, beispielsweise einer Feder, in der gezeigten Ruhelage in einer geschlossenen Position gehalten wird und ein Zurückströmen von Reduktionsmittel und insbesondere von Druckgas aus dem Mischbereich 18 in die Druckleitung 16 verhindert. In Strömungsrichtung hinter dem Mischbereich 18 schließt sich eine Leitung 22 an, welche zu der Einspritzdüse im Abgassystem des Kraftfahrzeuges führt.

Die in diesem gezeigten Beispiel als Druckgas verwendete Druckluft wird von einer Druckluftversorgung 24 des Kraftfahrzeuges bereitgestellt. Derartige Druckluftversorgungssysteme sind in LkW üblicherweise insbesondere zur Betätigung der Bremsen vorhanden. Mit dieser zentralen Druckluftversorgung 24 ist das gezeigte Dosierpumpenaggregat verbunden, wobei das Dosierpumpenaggregat eingangsseitig ein Solenoid bzw. Magnetventil 26 aufweist, welches die Druckluftleitung 28, die zu dem Mischbereich 18 führt, wahlweise mit der Druckluftversorgung 24 verbindet oder zur Atmosphäre 30 öffnet. Das elektrisch betätigte Magnetventil 26 ist so vorgespannt, dass es in seiner Ruhelage in der gezeigten Stellung gehalten wird, in der die Druckluftleitung 28 zur Atmosphäre 30 geöffnet ist.

In der Druckluftleitung 28 sind in Strömungsrichtung hinter dem Magnetventil 26 ein Druckregler 32 und hinter diesem eine Drossel 34 angeordnet.

An der Mischkammer bzw. dem Mischbereich 18 endet die Druckluftleitung in einem Rückschlagventil 36, welches so vorgespannt ist, dass es in der gezeigten Ruhelage geschlossen ist und durch den in der Druckluftleitung 28 wirkenden Druck gegen seine Vorspannung geöffnet werden kann. So ist sichergestellt, dass immer dann, wenn keine Druckluft aus der Druckluftleitung 28 in die Mischkammer 18 strömt, das Rückschlagventil 36 geschlossen ist, so dass kein Reduktionsmittel aus dem Mischbereich 18 in die Druckluftleitung 28 eindringen kann.

Das Absperrventil 12 in der Rücklaufleitung 10 ist druckluftbetätigt und über eine Betätigungsleitung 38 mit der Druckluftleitung 28 verbunden, wobei die Betätigungsleitung 38 zwischen dem Druckregler 32 und der Drossel 34 mit der Druckluftleitung 28 in Verbindung steht. Die Betätigungsleitung 38 sorgt dafür, dass dann, wenn das Magnetventil 26 umgeschaltet wird, so dass die Druckluftleitung 28 mit der Druckluftversorgung 24 in Verbindung steht, auch die Betätigungsleitung 38 unter Druck gesetzt wird. Der in der Betätigungsleitung 38 anstehende Luftdruck bewirkt dann ein Umschalten des Absperrventils 12 gegen dessen Vorspannung, so dass die Rücklaufleitung 10 verschlossen wird.

Die vorangehend beschriebenen Elemente, welche innerhalb der in Fig. 1 durch gestrichelte Linien D angedeuteten Grenze liegen, d. h. insbesondere die Dosierpumpe 2, das Absperrventil 12, das Magnetventil 26, der Mischpunkt 18, die Rückschlagventile und die diese Bauteile verbindenden Leitungen, sind sämtlich in das Dosierpumpenaggregat integriert, so dass das Dosierpumpenaggregat neben elektrischen Anschlüssen nach außen hin lediglich vier Fluidanschlüsse aufweist, nämlich zur Verbindung mit der Druckluftversorgung 24, zum Anschluss der zu der Einspritzdüse führenden Leitung 22, zum Anschluss der zu dem Reduktionsmitteltank 4 führenden Saugleitung 5 und zur Verbindung der Rücklaufleitung 10 mit dem Reduktionsmitteltank 4.

Bei Inbetriebnahme des Systems verbleibt das Magnetventil 26 zunächst in seiner geschlossenen Ruhelage (gezeigte Position), in welcher die Druckluftleitung 28 von der Druckluftversorgung 24 getrennt ist. Als erstes wird die Dosierpumpe 2 in Betrieb genommen, welche über die Saugleitung 5 Reduktionsmittel aus dem Reduktionsmitteltank 4 ansaugt. Die Vorspannung des Rückschlagventils 20 in der gezeigten geschlossenen Stellung ist so gewählt, dass bei geöffneter Rücklaufleitung 10 der Druck in der Druckleitung 16 nicht ausreicht, dass Rückschlagventil gegen die Vorspannung zu öffnen.

Da zunächst in der Druckluftleitung 28 kein Druck anliegt, ist auch die Betätigungsleitung 38 zunächst drucklos, so dass das Absperrventil 12 in seiner geöffneten Ruhestellung verbleibt und die Rücklaufleitung 10 geöffnet ist. Auf diese Weise fördert die Dosierpumpe 2 zunächst Reduktionsmittel aus dem Reduktionsmitteltank 4 und über den Verzweigungspunkt 8 durch die Rücklaufleitung 10 zurück in den Reduktionsmitteltank 4. Dies dient dazu, das System bei Inbetriebnahme zu entlüftend, d. h. zunächst sicherzustellen, dass die Druckleitung 15 vollständig mit Reduktionsmittel gefüllt ist.

Wenn die Druckleitung 16 und die Rücklaufleitung 10 vollständig mit Reduktionsmittel gefüllt sind, erreicht der Fluiddruck in der Druckleitung 16 und in der Rücklaufleitung 10 vor dem Absperrventil 12 einen bestimmten Grenzwert, welcher von dem Drucksensor 14 erfasst wird. Wenn dieser Grenzwert von dem Drucksensor 14 erfasst wird, schaltet eine Steuerung das Magnetventil 26 um, so das über die Druckluftversorgung 24 des Lkw die Druckluftleitung 28 mit Druckluft versorgt wird. Dadurch wird auch die Betätigungsleitung 38 mit Druck beaufschlagt, wodurch das Absperrventil 12 gegen die Federvorspannung umgeschaltet wird und auf diese Weise die Rücklaufleitung 10 geschlossen wird. Da nun die Druckleitung 16 nicht mehr über die Rücklaufleitung 10 zu dem Reduktionsmitteltank 4 hin geöffnet ist, steigt der Fluiddruck bei weiterem Betrieb der Dosierpumpe 2 in der Druckleitung 16 so weit an, dass der Druck ausreicht, das Rückschlagventil 20 gegen seine Federvorspannung zu öffnen, so dass das Reduktionsmittel in den Mischbereich 18 strömen kann und dort mit der Druckluft aus der Druckluftleitung 28 beaufschlagt wird. Druckluft und Reduktionsmittel strömen dann gemeinsam durch die Leitung 22 zu einer Einspritzdüse in der Abgasleitung des Lkw.

Über die Anzahl der Pumpenhübe der Dosierpumpe kann im Betrieb die Menge des zugeführten Reduktionsmittels eingestellt werden. Der Druckluftstrom durch die Druckluftleitung 28 in den Mischbereich 18 ist dabei konstant.

Wenn die Anlage außer Betrieb genommen wird, insbesondere beim Abstellen des Fahrzeuges, wird zunächst die Dosierpumpe 2 abgeschaltet, so dass kein Reduktionsmittel mehr aus dem Reduktionsmitteltank 4 gefördert wird. Dadurch sinkt der Druck in der Druckleitung 16 so weit ab, dass das Rückschlagventil 20 aufgrund seiner Vorspannung schließt und verhindert, dass weiteres Reduktionsmittel in den Mischbereich 18 eindringt. Da das Magnetventil 26 zunächst weiter geöffnet ist, strömt weiter Druckluft durch das Rückschlagventil 36 in den Mischbereich 18 ein und spült dort noch vorhandene Reduktionsmittelreste über die Leitung 22 aus.

Wenn dann das Magnetventil 26 durch Abschalten der Stromversorgung geschlossen wird, ist auch der Druckluftstrom durch die Druckluftleitung 28 und das Rückschlagventil 36 abgeschaltet, so dass das Gesamtsystem außer Betrieb genommen ist. In diesem Zustand schaltet auch das Absperrventil 12 wieder in seine Ruhelage zurück, d. h. die Rücklaufleitung 10 ist geöffnet.

Durch die Anordnung des Rückschlagventils 20 ist sichergestellt, dass keine Luft von der Mischkammer bzw. dem Mischbereich 18 in die Druckleitung 16 eindringen kann. So kann eine Kristallisation des Reduktionsmittels in der Druckleitung 16 verhindert werden. Da ferner nach dem Abschalten der Dosierpumpe 2 durch den konstanten Druckluftstrom im Mischbereich 18 dieser automatisch ausgespült wird, kann auch eine Kristallisation von Reduktionsmittel im Mischbereich 18 und in der sich abschließenden Leitung 22 verhindert werden.

Der Drucksensor 14, welcher bevorzugt ein elektrisches Signal ausgibt, dient neben der Erfassung der vollständigen Entlüftung der Druckleitung 16 auch dazu, weitere unerwünschte Betriebszustände zu erkennen. So kann durch den Drucksensor 14 eine verstopfte Rücklaufleitung 10 erkannt werden, nämlich Wenn der Druck bei geöffnetem Absperrventil 12 einen vorbestimmten Grenzwert übersteigt, welcher bei geöffneter Rücklaufleitung 10 normalerweise nicht auftreten kann. Ferner kann der Drucksensor 14 auch erfassen, dass die Einspritzdüse in der Abgasleitung des Fahrzeuges verstopft ist. Dann steigt nämlich der Druck in der Druckleitung 16 bei geöffnetem Magnetventil 26 ebenfalls über einen vorbestimmten Grenzwert an, welcher bei korrekt arbeitender Einspritzdüse normalerweise nicht auftreten kann. Darüber hinaus kann über den Drucksensor 14 auch erfasst werden, dass der Reduktionsmitteltank 4 leer ist. Dann nämlich sinkt im Betrieb der Druck in der Druckleitung 16 unter einen vorbestimmten Grenzwert ab, welcher im normalen Betrieb bei geschlossener Rücklaufleitung 10 normalerweise nicht auftreten kann.

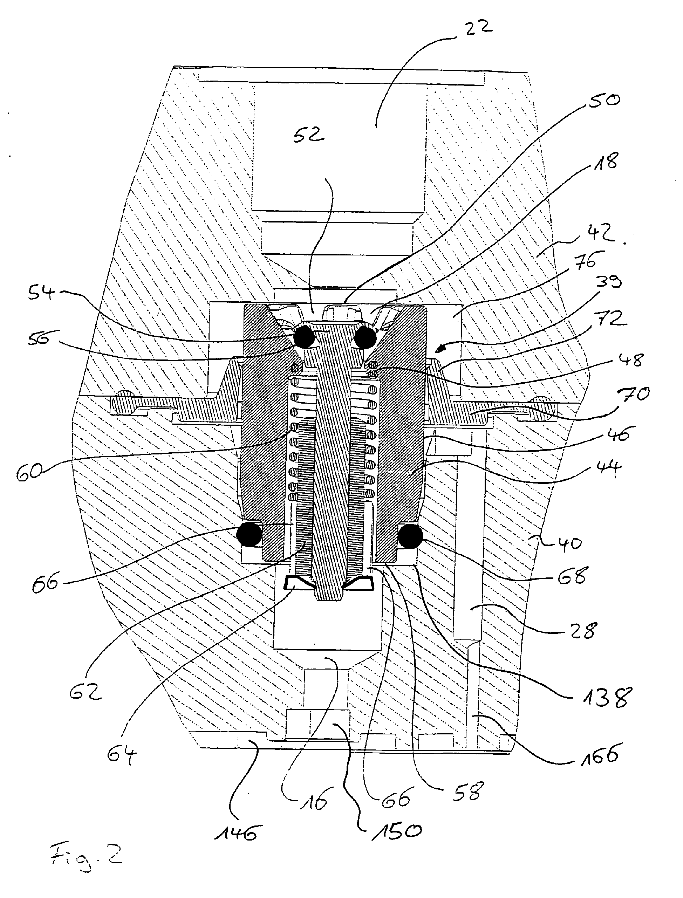

Anhand der Figuren 2 bis 5 wird nachfolgend ein beispielhafter Aufbau der Vormischeinrichtung im Wesentlichen bestehend aus dem Mischbereich 18 und den Rückschlagventilen 20 und 36 beschrieben.

Fig. 2 zeigt eine Schnittansicht der Vormischeinrichtung 39 in einem in einen Pumpenkopf eingebauten Zustand. Der Pumpenkopf wird im Wesentlichen von einer Zentralplatte 40 und einer an dieser anliegenden Stirnplatte 42 gebildet, wobei zwischen den Platten 40 und 42 Strömungskanäle ausgebildet sind und die Vormischeinrichtung 39 angeordnet ist.

In der Stirnplatte 42 ist die Leitung 22 als Anschluss ausgebildet, an welchen eine Fluidleitung angebunden werden kann, welche zu der Einspritzdüse im Abgassystem des Fahrzeuges führt. In der Zentralplatte 40 sind die Druckleitung 16 sowie die Druckluftleitung 28 in Form von Kanälen in der Oberfläche und sich daran anschließenden Durchgangslöchern ausgebildet.

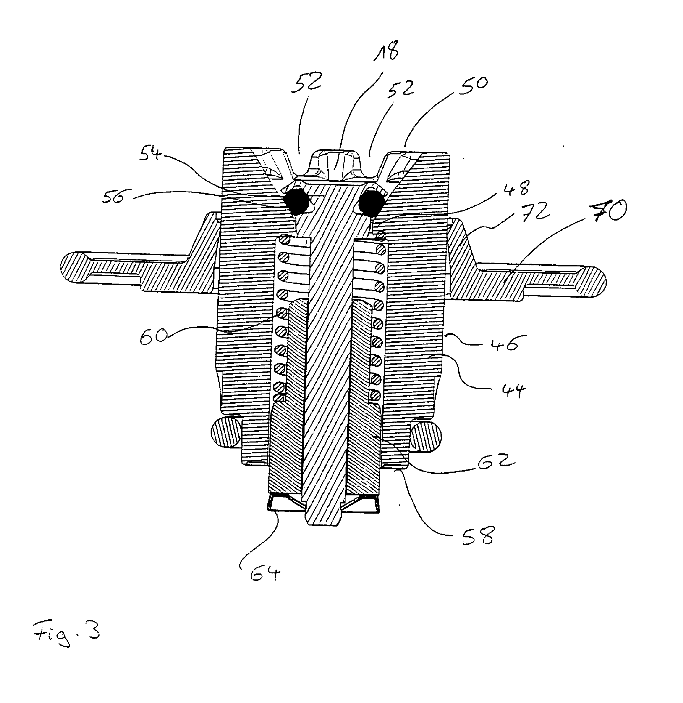

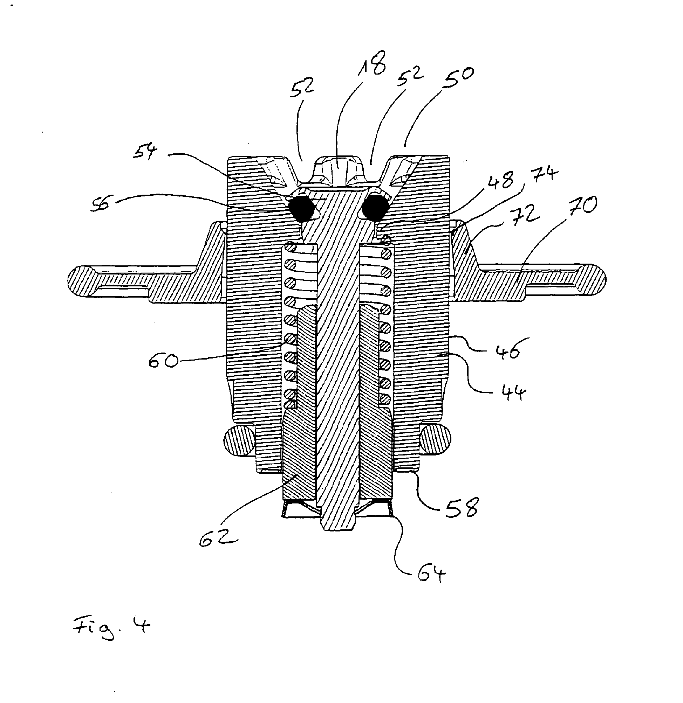

Die Vormischeinrichtung weist als zentrales Bauteil eine zylindrische Hülse 44 mit zylindrischer Außenwandung 46 auf. Im Inneren der Hülse 44 ist eine Einschnürung 48 ausgebildet, welche den Innenraum der Hülse 46 in zwei Teile teilt. Der erste Teil des Innenraums erweitert sich ausgehend von der Einschnürung 48 zu einer ersten Stirnseite 50 der Hülse 44 hin trichterförmig. Dieser Bereich ist der eigentliche Mischbereich 18 bzw. die Mischkammer 18 der Vormischeinrichtung 39. In der Umfangswandung des Mischbereiches 18 sind gleichmäßig über den Umfang verteilt Ausnehmungen bzw. Durchbrechungen 52 ausgebildet, welche als Eintrittsöffnungen für die Druckluft dienen. Die von der Einschnürung 48 umgebende Öffnung im Inneren der Hülse 44 dient als Eintrittsöffnung für das Reduktionsmittel in den Mischbereich 18. Dieser Bereich ist durch einen Kolben 54 mit einem in eine Umfangsnut eingelegten O-Ring 56 verschlossen. Dabei kann der O-Ring 56, wie in den Figuren 3 und 4 gezeigt, dichtend an der trichterförmigen Innenwandung des Mischbereiches 18 im Inneren der Hülse 44 zur Anlage kommen.

Der Kolben 54 erstreckt sich mit einer Kolbenstange 55 durch die Einschnürung 48 hindurch in den zweiten Bereich im Inneren der Hülse 44 zu der zweiten Stirnseite 58, welche der ersten Stirnseite 50 abgewandt ist. In dem zweiten Teil des Innenraums der Hülse. 44 ist eine Druckfeder angeordnet, welche sich mit einem ersten Ende an der Einschnürung 48 abstützt. Das entgegengesetzte Ende der Druckfeder 60, welche als Schraubfeder ausgebildet ist, liegt an einer die Kolbenstange 55 umgebenden Führungshülse 62 an einem der Einschnürung 48 zugewandten Absatz an. Die Führungshülse 62 führt die Kolbenstange und damit den Kolben 54 im Inneren der Hülse 44, in dem sie an der Innenwandung der Hülse 44 anliegt. Die Führungshülse 62 stützt sich über einen Federring 64 an den dem Kolben 54 abgewandten Längsende der Kolbenstange 55 ab. So drückt die Druckfeder 60 die Kolbenstange 55 in die Richtung zu der zweiten Stirnseite 58 der Hülse 40, so dass der Kolben 54 mit dem O-Ring 56 gegen die trichterförmige bzw. konische Innenwandung des Mischbereiches 18 gedrückt wird. Auf diese Weise wird der Kolben 54, welcher das Rückschlagventil 20 in Fig. 1 bildet, in seiner Ruhelage im geschlossenen Zustand gehalten, wie in den Figuren 3 und 4 gezeigt ist.

Die Führungshülse weist an ihrem Außenumfang Längsnuten 66 auf (in den Figuren 3 bis 5 nicht gezeigt), durch welche das Reduktionsmittel durch die Druckleitung 16 in das Innere der Hülse 44 zu der Einschürung 48 strömen kann. Durch den die Hülse 44 außen umgebende O-Ring 58 wird dabei verhindert, dass das Reduktionsmittel außen an der Hülse 44 vorbeiströmen kann. Im eingesetzten Zustand dichtet der O-Ring 68 die Außenwandung der Hülse 44 gegen die Innenwandung einer Ausnehmung, in welcher die Hülse 44 in der Zentralplatte 40 angeordnet ist, ab.

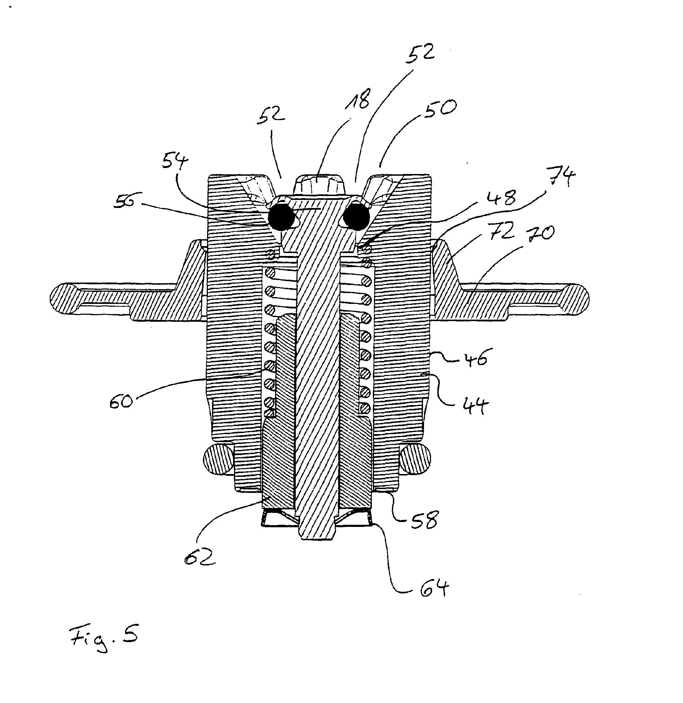

Der Fluiddruck in der Druckleitung 16 wirkt im Inneren der Hülse 44 auf den Kolben 54 in Richtung der Längsachse der Kolbenstange 55. Bei ausreichend hohem Fluiddruck in der Druckleitung 16 übersteigt die durch den Druck auf den Kolben 54 wirkende Kraft die Federkraft der Druckfeder 60, so dass der Kolben 54 mit der Kolbenstange 55 in Richtung der ersten Stirnseite 50 der Hülse 44 verschoben wird und der Kolben 54 mit dem O-Ring 56 von der konischen Innenwandung des Mischbereiches 18 abhebt, wie in den Figuren 2 und 5 gezeigt. So entsteht ein ringförmiger Spalt zwischen dem Kolben 54 bzw. dem O-Ring 56 und der umgebenden Innenwandung der Hülse 44 bzw. des Mischbereiches 18, durch welchen das Reduktionsmittel in den Mischbereich 18 einströmen kann.

Das zweite Rückschlagventil 36 der Vormischeinrichtung 39 wird durch eine ringförmige elastische Manschette 70 gebildet, welche zwischen der Zentralplatte 40 und der Stirnplatte 42 eingeklemmt ist. Dabei kommt insbesondere ein verdickter Bereich am Außenumfang der Manschette 70 sowohl an der Zentralplatte 40 als auch der Stirnplatte 42 zu Anlage, so dass die Druckluft aus der Druckluftleitung 28 nicht am Außenumfang der Manschette 70 vorbei strömen kann.

An ihrem Innenumfang ist die Manschette 70 zur Stirnseite 50 der Hülse 44 hin in axialer Richtung hülsenförmig verlängert, so dass ein Kragen 72 gebildet wird. Dieser Kragen 72 erstreckt sich leicht konisch geneigt zur Außenwandung 46 der Hülse 44 und kommt mit seinem freien Stirnende an dieser zur Anlage. Dabei ist die Manschette 70 bzw. der Kragen 72 derart elastisch ausgebildet, dass die Manschette in ihrer Ruhelage dichtend an der Außenwandung 46 der Hülse 44 gehalten wird, wie in den Figuren 2 und 3 gezeigt ist.

Wenn Druckluft in die Druckluftleitung 28 eingeleitet wird, umströmt die Druckluft in der Zentralplatte 40 zunächst am Außenumfang 46 die gesamte Hülse 44, da die die Hülse 44 aufnehmende Ausnehmung in der Zentralplatte 40 in dem der Druckleitung 16 abgewandten Bereich größer als der Außendurchmesser der Hülse 44 ausgebildet ist. Die Druckluft strömt dann in den Bereich zwischen dem Kragen 72 der Manschette 70 und der Außenwandung 46 der Hülse 44 ein, wobei durch den Luftdruck der Kragen 72 von der Außenwandung der Hülse 46 weggedrückt wird, so dass ein ringförmiger Spalt 74 zwischen der Außenwandung 46 und dem Innenumfang der Manschette 70 bzw. des Kragens 72 entsteht, durch welchen die Druckluft in die Ausnehmung 76 strömen kann, in welcher die Hülse 44 in der Stirnplatte 42 angeordnet ist. Von der Ausnehmung 46 strömt die Druckluft dann durch die Ausnehmungen bzw. Durchbrechungen 52 in den Mischbereich 18 und von dort gemeinsam mit dem zugeführten Reduktionsmittel durch die Leitung bzw. den Anschluss 22 weiter zu der Einspritzdüse im Abgassystem des Fahrzeuges.

Wenn die Druckluftzufuhr in der Druckluftleitung 28 abgeschaltet wird, legt sich die Manschette 70 mit ihrem Kragen 72 aufgrund ihrer Elastizität wieder dichtend an die Außenwandung 46 der Hülse 44 an. Aufgrund des in die Ausnehmung 76 ragenden Kragen 72 der Manschette 70 wird ferner erreicht, dass ein höherer Druck in der Ausnehmung 76 die hülsenförmige Verlängerung bzw. den Kragen 72 der Manschette 70 noch stärker gegen die Außenwandung 46 drückt und somit das Rückschlagventil 36 sicher verschließt.

Die Ausnehmungen bzw. Durchbrechungen 52 sind so ausgebildet, dass sie sich in Längsrichtung der Hülse 44 bis zur Außenseite des Kolbens 54 erstrecken. Ferner sind die Ausnehmungen 52 so geformt, dass sie sich zu dem Inneren der Hülse 44, d. h. zum Mischbereich 18 hin erweitern. Dadurch wird erreicht, dass die Druckluft, welche durch die Ausnehmungen 52 in den Mischbereich 18 einströmt, den gesamten Mischbereich 18 an seiner Innenwandung und insbesondere auch die Außenseite des Kolbens 54 vollständig überströmt, so dass Reduktionsmittelreste aus dem Mischbereich 18 vollständig ausgespült werden können.

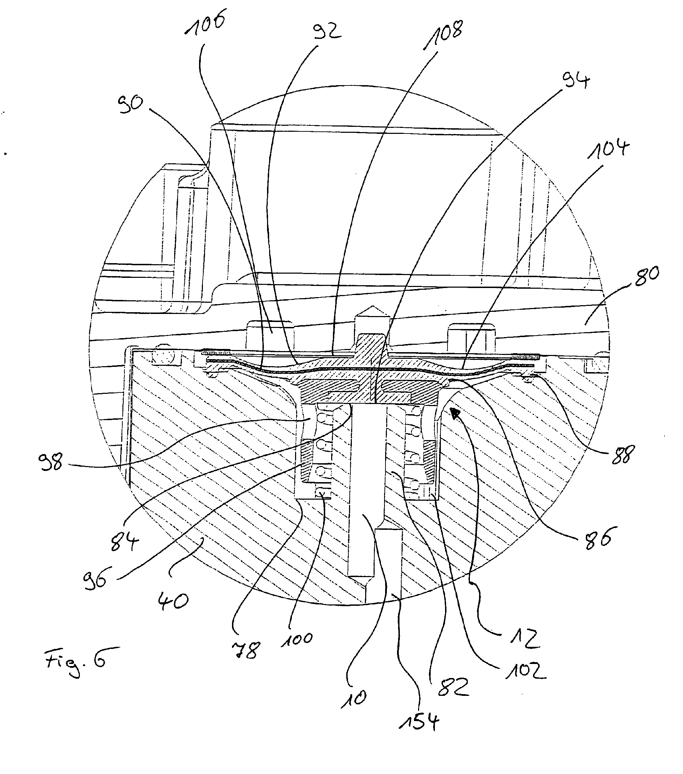

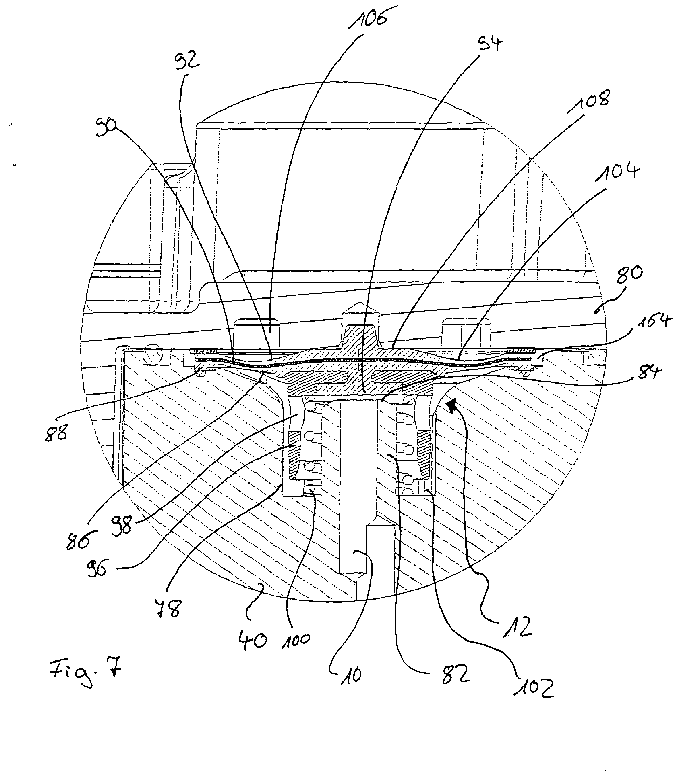

Anhand der Figuren 6 und 7 wird nachfolgend der Aufbau des Absperrventils 12 näher beschrieben. Das Absperrventil 12 ist in der Zentralplatte 40 in einer Ausnehmung 78 angeordnet. Die Ausnehmung 78 ist in der der Stirnplatte 42 abgewandten Oberfläche der Zentralplatte 40 ausgebildet und wird durch die Frontplatte 80 eines Antriebsgehäuses des Dosierpumpenaggregates verschlossen, an welche die Zentralplatte 40 flächig angesetzt ist.

Die Ausnehmung 78 ist an ihrem Boden zylindrisch ausgebildet und öffnet sich zu der Frontplatte 80 hin trichterförmig. Zentral in dem zylindrischen Abschnitt erstreckt sich vom Boden der Ausnehmung 78 ein Einlassstutzen 82 in die Ausnehmung 78 hinein. Im Inneren des Einlassstutzens 82, d. h. konzentrisch zu diesem, verläuft die von der Druckleitung 8 abzweigende Rücklaufleitung 10 so, dass sie zu der Stirnseite des Einlassstutzens 82 geöffnet ist. Die dem Boden der Ausnehmung 78 abgewandte Stirnseite des Einlassstutzens 82 bildet so einen Ventilsitz 84. An welchem im geschlossenen Zustand, welcher in Fig. 6 gezeigt ist, ein membranförmig ausgestaltetes Ventilelement 86 dichtend anliegt. Das Ventilelement 86 ist als kreisförmige Membran ausgebildet, welche an ihrem Außenumfang 88 zwischen den aneinander angrenzenden Oberflächen der Zentralplatte 40 und der Frontplatte 80 gehalten wird. Der Zentralbereich der Ventilmembran 86 ist gegenüber dem Umfang 88 in der Erstreckungsrichtung des Einlassstutzens 82 bewegbar, was durch die Elastizität der Membran gewährleistet wird.

Die Ventilmembran bzw. das Ventilelement 86 weist einen Träger 90 auf, welcher von einem elastischen Material 92 umschlossen bzw. umspritzt ist, welches auch die an dem Ventilsitz 84 zur Anlage kommende Dichtfläche 94 definiert.

Die Dichtfläche 94 umgebend erstreckt sich von dem Ventilelement 86 ausgehend konzentrisch zu dem Einlassstutzen 82 eine Führungshülse 96, welche in ihrer Umfangswandung Durchbrechungen 98 aufweist. Die Führungshülse 96 ist integral mit dem elastischen Material 92 und über dieses mit dem Träger 90 des Ventilelementes 86 verbunden. Vorzugsweise sind der Träger 90 und die Führungshülse 96 mit dem elastischen Material 92 umspritzt und so formschlüssig miteinander verbunden.

Im Inneren der Führungshülse 96 ist eine Druckfeder 100 in Form einer Schraubenfeder angeordnet bzw. geführt, so dass die Druckfeder 100 sich parallel zur Längsachse des Einlassstutzens 82 zwischen dessen Außenumfang und dem Innenumfang der Führungshülse 96 erstreckt. Die Druckfeder 100 stützt sich mit einem Längsende am Boden der Ausnehmung 78 und mit dem entgegengesetzten Längsende an dem Ventilelement 86 am Umfang der Dichtfläche 94 ab. Die Druckfeder 100 ist so dimensioniert, dass sie das Ventilelement 96 in seine geöffnete, d. h. von dem Ventilsitz 84 beabstandete Position drückt, welche in Fig. 7 gezeigt ist. In dieser in Fig. 7 gezeichneten Stellung des Absperrventils 12 kann das Reduktionsmittel, welches von der Dosierpumpe in die Rücklaufleitung 10 gefördert wird durch den Einlassstutzen 82 und durch den ringförmigen Spalt zwischen der Dichtfläche 94 und dem Ventilsitz 84 in das Innere der Führungshülse 96 strömen. Durch die geöffnete, dem Ventilelement 86 abgewandte Stirnseite sowie die Durchbrechungen 98 der Führungshülse 96 kann das Reduktionsmittel in die Ausnehmung 78 einströmen. Von der Ausnehmung 78 strömt das Reduktionsmittel durch einen am Umfang der Ausnehmung 78 mündenden Kanal 102 zu einem Anschlussstutzen des Dosierpumpenaggregats und von dort weiter durch eine Rücklaufleitung zu dem Reduktionsmitteltank 4.

Um das Absperrventil 12 zu schließen wird das membranfrömige Ventilelement 86 von seiner dem Einlassstutzen 82 abgewandten Seite über die Betätigungsleitung 38 mit der Druckluft aus der Druckluftleitung 28 beaufschlagt. Der auf die Oberfläche 104 des Ventilelementes 86 wirkende Luftdruck bewegt das Ventilelement 86 gegen die Federkraft der Druckfeder 100 in Richtung der Längsachse des Einlassstutzens 82 auf diesen zu, so dass das Ventilelement 86 mit seiner Dichtfläche 84 an dem Ventilsitz 84 dichtend zur Anlage kommt. In diesem in Fig. 6 gezeigten Zustand kann kein Reduktionsmittel aus dem Einlassstutzen 82 in das Innere der Ausnehmung 78 strömen, so dass die Rücklaufleitung 10 durch das Absperrventil 12 verschlossen bzw. unterbrochen ist.

Die Betätigungsleitung 38, durch welche die Druckluft zur Beaufschlagung der Oberfläche 104 strömt, ist als Kanal im Inneren der Zentralplatte 40 ausgebildet, welcher zwischen der Zentralplatte 40 und der Frontplatte 80 im Bereich der Oberfläche 104 des Ventilelementes 86 mündet. Im gezeigten Beispiel ist dazu in der Frontplatte 80 ein dem Ventilelement 86 zugewandter offener Ringkanal 106 ausgebildet, in dem sich die Druckluft verteilen kann, so dass der Luftdruck gleichmäßig auf die gesamte Oberfläche 104 wirkt. Ferner ist die Oberfläche 104 derartig geschwungen ausgebildet, dass sie in einem an den Umfangsbereich 88 radial innenliegend angrenzenden ringförmigen Bereich beabstandet zu der Oberflächenebene der Zentralplatte 40 ausgebildet ist.

Der an der Oberfläche 104 der Dichtfläche 94 entgegengesetzte Zentralbereich 108 ist als Anschlagfläche ausgebildet, welche in geöffneten Zustand (siehe Fig. 7) des Absperrventils 12 an der Oberfläche der Frontplatte 80 zur Anlage kommt und somit den Weg des Ventilelementes 86 in der geöffneten Position begrenzt. Der Zentralbereich 108 weist zentrisch einen Vorsprung auf, welcher zur Führung des Ventilelementes in ein Loch in der Oberfläche der Frontplatte 80 eingreift.

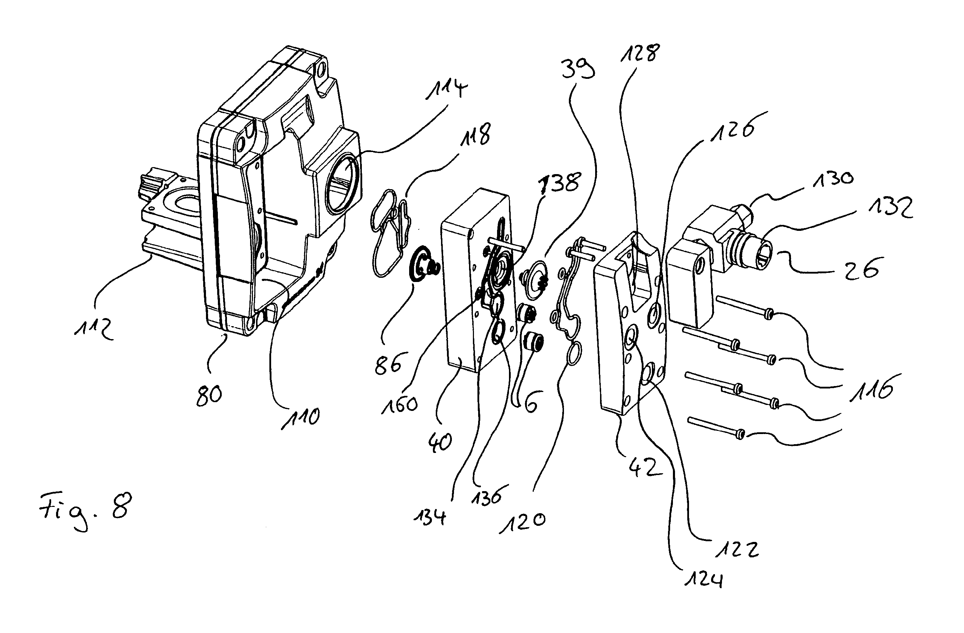

Wie in der Explosionsansicht in Fig. 8 gezeigt ist, besteht der Pumpenkopf des beschriebenen Dosierpumpenaggregates im Wesentlich aus drei plattenförmigen Bauteilen, nämlich der Zentralplatte 40, an deren erster Oberfläche die Frontplatte 80 eines Antriebsgehäuses und an deren zweiter entgegengesetzter Oberfläche die Stirnplatte 42 zur Anlage kommt.

Die Frontplatte 80 des Antriebsgehäuses stellt das tragende Element des gesamten Antriebsgehäuses dar. An seiner Vorderseite, d. h. der der Zentralplatte 40 zugewandten Seite weist das Antriebsgehäuse eine Ausnehmung 110 in Form der Außenkontur der Zentralplatte 40 auf, in welche die Zentralplatte 40 eingesetzt wird. An seiner der Zentralplatte 40 abgewandten Innenseite weist die Frontplatte 80 Befestigungseinrichtungen 112 zur Befestigung der Antriebselemente für die Membranpumpe, d. h. zur Befestigung des Motors sowie des Getriebes und insbesondere eines Exzenter- bzw. Kurbeltriebes auf. Ferner werden alle übrigen, in dem Antriebsgehäuse angeordneten Bauteile des Dosierpumpenaggregates an der Innenseite der Frontplatte 80 befestigt. Dies sind insbesondere auch elektrische Leiterplatten, auf welchen elektrische Elemente zum Anschluss der Antriebseinrichtung sowie Steuerung des Dosierpumpenaggregates angeordnet sind. Die Frontplatte weist eine Öffnung 114 auf, in welche ein zentraler Anschlussstecker eingesetzt wird, welcher die im Inneren des Antriebsgehäuses angeordneten elektrischen Komponenten bzw. die elektronische Steuerung des Dosierpumpenaggregates mit einer Stromversorgung sowie externen Steuerelementen, beispielsweise einer Motorsteuerung eines Lkw verbindet. Über Löcher an den Ecken der Frontplatte 80 wird diese mit einem topfförmigen Antriebsgehäuses verbunden, welches über die an der Innenseite der Frontplatte 80 angebrachten Elemente gestülpt wird.

Die Zentralplatte 40 wird über die Stirnplatte 42 mittels Befestigungsbolzen 116 an der Frontplatte 80 in der Ausnehmung 110 fixiert. Dadurch wird die Zentralplatte 40 zwischen der Frontplatte 80 und der Stirnplatte 42 eingeklemmt.

Zwischen der Frontplatte 80 und der Zentralplatte 40 ist ein Dichtungselement 118 und zwischen der Zentralplatte 40 und der Stirnplatte 42 ein Dichtungselement 120 angeordnet. Die Dichtungselemente 118 und 120 dichten die zwischen der Zentralplatte 40 und der Frontplatte 80 bzw. der Stirnplatte 42 ausgebildeten Kanäle und Öffnungen zu dem Spalt zwischen den einander angrenzenden Platten hin ab. Dabei sind die Dichtungselemente 118 und 120 so ausgebildet, dass sie verschiedene Kanäle bzw. Öffnungen und Bereiche in den Oberflächen der Zentralplatte 40 gegeneinander isolieren bzw. abdichten.

In der Stirnplatte sind drei Anschlussöffnungen 122, 124 und 126 ausgebildet, über die die Dosierpumpe mit externen Anschlussleitungen verbunden wird. An der Anschlussöffnung 122 wird eine Saugleitung zu dem Reduktionsmitteltank 4 angeschlossen, über welche die Dosierpumpe 2 das Reduktionsmittel ansaugt. An den Anschluss 124 wird eine Rücklaufleitung 10 zurück zu dem Reduktionsmitteltank 4 angeschlossen, durch welche Reduktionsmittel beim Entlüften bzw. Füllen des hydraulischen Systems des Dosierpumpenaggregates zurück in den Reduktionsmitteltank 4 gepumpt wird. An die Anschlussöffnung 126 wird die Leitung 22 zu dem Abgassystem bzw. einer Einspritzdüse im Abgasstrom angeschlossen, durch welche das Reduktionsmittel/Druckgas-Gemisch von dem Dosierpumpenaggregat zu der Einspritzdüse gefördert wird.

Ferner ist an der Stirnplatte 42 eine in einer Ausnehmung gelegene Anschlussöffnung 128 ausgebildet, an welchem von der Vorderseite, d. h. der der Zentralplatte 40 abgewandten Seite, der Stirnseite 42 das Magnetventil 26 angesetzt wird, welches den Drucklufteingang bildet. Das Magnetventil 26 weist einen Drucklufteingang 130 zur Verbindung mit der Druckluftversorgung 24 auf. Ferner weist das gezeigte Magnetventil 26 einen elektrischen Anschlussstecker 132 auf. Die mit dem elektrischen Anschlussstecker 132 zu verbindende Anschlussleitung ist vorzugsweise Teil eines Kabelbaumes, welcher mit dem in die Öffnung 114 eingesetzten Anschlussstecker verbunden wird.

Die Anschlussöffnungen 122, 124,126 und 128 erstrecken sich als Durchgangslöcher durch die Stirnplatte 42, so dass sie zu der Zentralplatte 40 hin geöffnet sind.

Die Zentralplatte 40 weist zwei Durchgangslöcher 134 und 136 auf, von welchen das Durchgangsloch 136 die Saugseite und das Durchgangsloch 134 den Anfang der Druckleitung bzw. des Druckkanals 16 ausgangsseitig der Dosierpumpe 2 bildet. Von der der Stirnplatte 42 zugewandten Seite her sind in die Durchgangslöcher 134 und 136 die Rückschlagventile 6 eingesetzt. Das Durchgangsloch 136 steht über das Rückschlagventil 6 in Verbindung mit der Anschlussöffnung 122 in der Stirnplatte 42.

In der der Stirnplatte 42 zugewandten Oberfläche der Zentralplatte 40 ist ferner die Ausnehmung 138 ausgebildet, in welcher die Vormischeinrichtung 39 mit der Hülse 44 und der umgebenden Manschette 70 eingesetzt ist. Gegenüberliegend zu der Ausnehmung 136 ist in der Stirnplatte 42 die Anschlussöffnung 126 ausgebildet, welche die Leitung 22 bzw. den Anschluss für die Leitung 22 zu der Einspritzdüse in dem Abgasstrom bildet.

An der der Frontplatte 80 zugewandten Seite der Zentralplatte 20 ist die Ausnehmung 78 ausgebildet, in welche das Ventilelement 86 des Rücklauf- bzw. Absperrventils 12 eingesetzt ist.

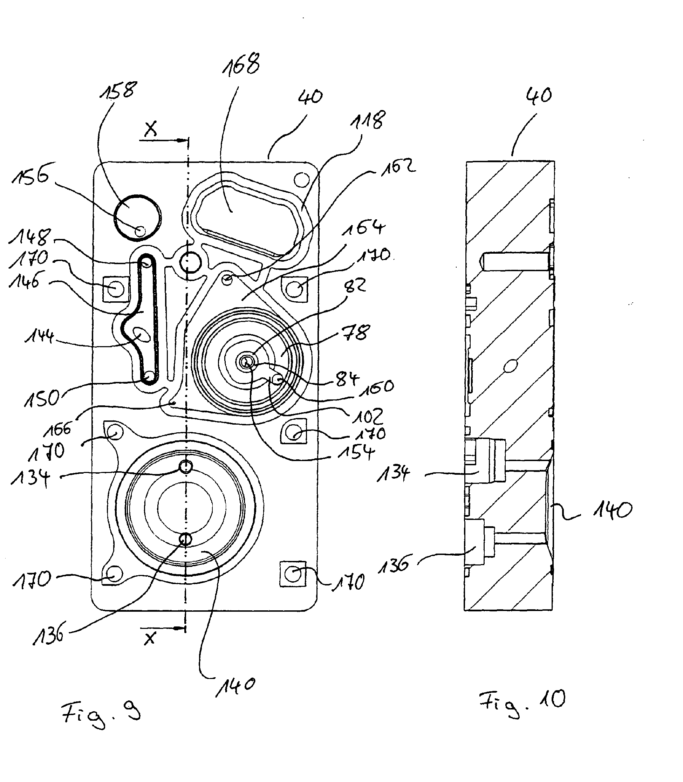

Der genaue Verlauf der Fluidkanäle im Inneren der Zentralplatte wird nachfolgend anhand der Ansichten 9 bis 12 der Zentralplatte 40 in Fig. 9 bis 12 näher beschrieben.

Fig. 9 zeigt in einer Draufsicht die der Frontplatte 80 zugewandte Oberfläche der Zentralplatte 40. In dieser Oberfläche ist eine Ausnehmung 140 ausgebildet, welche das Pumpenvolumen der Membranpumpe definiert. Die Ausnehmung 140 wird durch die Pumpenmembran, welche am Außenumfang auf die Ausnehmung 140 an deren Rand aufgelegt wird, verschlossen. Im Boden der Ausnehmung 140 münden die Durchgangslöcher 134 und 136, welche sich quer durch die Zentralplatte 40 zu der der Stirnplatte 42 zugewandten Oberfläche der Zentralplatte erstrecken. Auf der der Stirnplatte 42 zugewandten Seite sind die Durchgangslöcher 134 und 136 erweitert ausgebildet, so dass sie Aufnahmen für die Rückschlagventile 6 bilden, welche in die Durchgangslöcher 134 und 136 eingesetzt werden. Wie beschrieben, bildet das Durchgangsloch 136 die Saugleitung der Dosierpumpe 2, durch welche das Reduktionsmittel beim Pumpvorgang angesaugt wird. Das Durchgangsloch 134 bildet den Anfang der Druckleitung bzw. des Druckkanals 16, durch welchen das von der Dosierpumpe gepumpte Reduktionsmittel zu der Vormischeinrichtung 39 fließt.

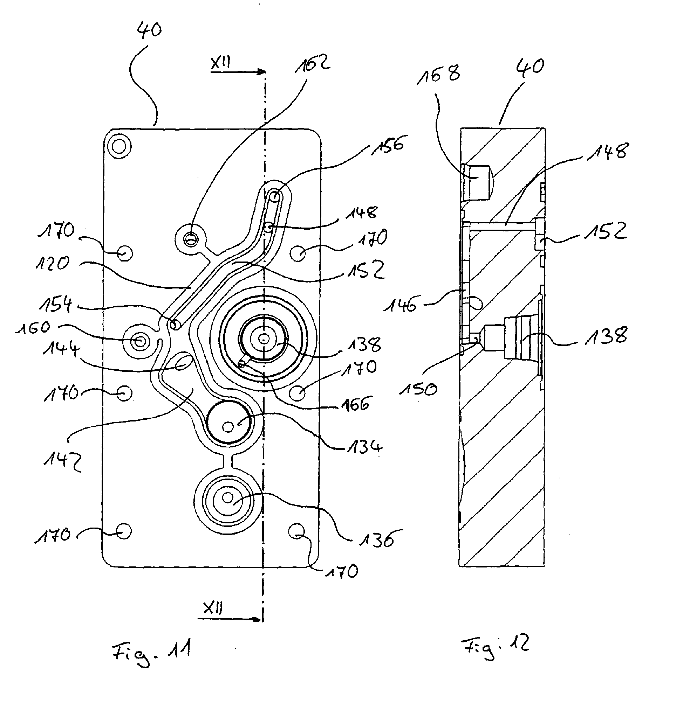

Das Durchgangsloch 134 endet an der dem Antriebsgehäuse abgewandten, d. h. der Stirnplatte 42 zugewandten Oberfläche der Zentralplatte 40, welche in einer Draufsicht in Fig. 11 gezeigt ist, in einem in der Oberfläche der Stirnplatte 40 als Nut ausgebildeten Kanal 142. Von diesem Kanal 142 erstreckt sich wiederum ein schräg zur Oberfläche verlaufendes Durchgangsloch 144 zu der der Frontplatte 80 zugewandten Oberfläche der Zentralplatte 40, welche in Fig. 9 gezeigt ist. Dort endet das Durchgangsloch 144 in einem Kanal 146, welcher als Nut bzw. Vertiefung in der Oberfläche der Zentralplatte 40 ausgebildet ist. Von dem Kanal 146 erstrecken sich wiederum zwei Durchgangslöcher 148 und 150 zu der entgegengesetzten Oberfläche der Zentralplatte 40. Das Durchgangsloch 150 erstreckte sich dabei zu der Ausnehmung 138, in welche die Vormischeinrichtung 39 eingesetzt wird, wie anhand der Figuren 2 bis 5 beschrieben wurde. Das Durchgangsloch 134, der Kanal 142, das Durchgangsloch 144, der Kanal 146 sowie das Durchgangsloch 150 bilden somit die Druckleitung 16, welche von der Dosierpumpe 2 zu der Vormischeinrichtung 39 führt.

Von dem Kanal 146 ausgehend erstreckt sich das Durchgangsloch 148 zu einem an der entgegengesetzten Oberfläche der Zentralplatte 40 (siehe Fig. 11) ausgebildeten Kanal 152, welcher ebenfalls als Nut in der Oberfläche der Zentralplatte 40 ausgebildet ist.

Von dem Kanal 152 aus, erstrecken sich zwei an entgegengesetzten Enden des Kanals 152 gelegene Durchgangslöcher 154 und 156 zu der entgegengesetzten Oberfläche der Zentralplatte 40, d. h. der dem Antriebsgehäuse bzw. der Frontplatte 80 zugewandten Oberfläche. Dort mündet das Durchgangsloch 156 in eine Ausnehmung 158, welche eine Aufnahme für den Drucksensor 14 bildet. Der Drucksensor 14 wird durch die Frontplatte 80 hindurch vom Inneren des Antriebsgehäuses her in die Zentralplatte 40 eingesetzt.

Das Durchgangsloch 154 erstreckt sich mit einem Versatz zu der Ausnehmung 78 in der der Frontplatte 80 zugewandten Oberfläche der Zentralplatte 40. In die Ausnehmung 78 wird, wie anhand von den Figuren 6 und 7 beschrieben, dass Absperrventil 12 eingesetzt. Das Durchgangsloch 154 endet dabei in dem den Ventilsitz 84 definierenden Einlassstutzen 82. So bildet der Anfang des Durchgangsloches 148 in dem Kanal 146 den Verzweigungspunkt 8, von dem aus sich die Rücklaufleitung 10 erstreckt. Dabei wird die Rücklaufleitung 10 durch das Durchgangsloch 148, den Kanal 152 sowie das Durchgangsloch 154 gebildet, woran sich das Absperrventil 12 in Form des Ventilelementes 86 anschließt.

In der Ausnehmung 78 ist ein sich umfänglich wegerstreckender Kanal 102 ausgebildet, welcher die Fortsetzung der Rücklaufleitung 10 stromabwärts des Absperrventils 12 bildet. Der Kanal 102 mündet in einem weiteren Durchgangsloch 160, welches sich wieder durch die Zentralplatte 40 hindurch zu der entgegengesetzten Oberfläche, welche der Stirnplatte 42 zugewandt ist, erstreckt. Das Durchgangsloch 160 liegt der Anschlussöffnung 124 in der Stirnplatte 42 gegenüber, an welche die Rücklaufleitung 10 zu dem Reduktionsmitteltank 4 angeschlossen wird.

Die Anschlussöffnung 128 in der Stirnplatte 42 liegt dem in der Zentralplatte 40 ausgebildeten Durchgangsloch 162 gegenüber. Das Durchgangsloch 162 erstreckt sich durch die Zentralplatte 40 hindurch zu einer Ausnehmung 164, welche die Ausnehmung 78, in welche das Rückschlagventil 12 eingesetzt wird, an der der Frontplatte 80 zugewandten Oberfläche der Zentralplatte 40 umgibt. Die Ausnehmung 164 umgibt den Außenumfang 88 des Ventilelementes 46 (siehe Fig. 7), so dass die Ausnehmung 78 durch das eingesetzte Ventilelement 86 von der Ausnehmung 164 getrennt wird. Über die Ausnehmung 164 und den Ringkanal 106 in der Frontplatte 80 wird das Ventilelement 86 des Absperrventils 12 mit Druckluft beaufschlagt. So wird das Absperrventil 12, wenn Druckluft in das Durchgangsloch 162 einströmt, wenn das Magnetventil 26 geöffnet ist, geschlossen.

Von der Ausnehmung 164 zweigt ein weiteres Durchgangsloch 166 zu der entgegengesetzten Oberfläche der Zentralplatte 40 ab. Das Durchgangsloch 166 ist so eng ausgebildet, dass es die Drossel 134 in der Druckluftleitung 28 bildet. Durch das Durchgangsloch 166 strömt die Druckluft zu der Vormischeinrichtung 39, wie anhand der Figuren 2 bis 5 beschrieben. Die Druckluftleitung 28 wird somit in der Zentralplatte 40 durch das Durchgangsloch 162, die Ausnehmung 164 und das Durchgangsloch 166 gebildet. Die Betätigungsleitung 28 wird durch die Ausnehmung 164 definiert.

In der der Frontplatte 80 zugewandten Oberfläche der Zentralplatte 40 ist ferner eine Ausnehmung 168 ausgebildet, in welche ein Heizelement eingesetzt wird, über welches die Zentralplatte 40 geheizt werden kann, um ein Einfrieren des Reduktionsmittels in den Kanälen zu verhindern.

Das Dichtungselement 118, welches auf die der Frontplatte 80 zugewandte Oberfläche der Zentralplatte 40 aufgelegt ist, ist als integrales Dichtungselement ausgebildet, welche die Ausnehmung 164 sowie die Ausnehmung 168 jeweils umfänglich umgibt, um diese Ausnehmungen gegenüber den anderen in der Oberfläche ausgebildeten Kanälen und nach außen hin abzudichten. Der Kanal 146 wird ebenfalls von dem Dichtungselement 118 umgeben, jedoch ist das Dichtungselement über dem Kanal 146 geschlossen ausgebildet, so dass die nach außen offene Oberfläche des Kanals 146, welche der Frontplatte 80 zugewandt ist, durch das Dichtungselement 118 überdeckt wird. Dadurch wird erreicht, dass das Reduktionsmittel nicht in Kontakt mit der Frontplatte 80 kommt, so dass die Frontplatte 80 nicht resistent gegen das Reduktionsmittel ausgebildet werden muss.

Entsprechend ist das Dichtungselement 120, welches zwischen der Zentralplatte 40 und der Stirnplatte 42 eingelegt ist, als integrales Bauteil ausgebildet, welches die Kanäle 142 und 152 umgibt und nach außen abdichtet und gleichzeitig die Mündung der Durchgangslöcher 160, 162 und 136 umfänglich umgibt, um diese nach außen zum Spalt zwischen der Zentralplatte 40 und Stirnplatte 42 hin abzudichten. Die Ausnehmung 138 ist nicht von einem separaten Dichtungselement umgeben, da diese umfänglich durch die Manschette 70 der Vormischeinrichtung 39 abgedichtet wird, wie anhand von Fig. 2 beschrieben wurde.

Im Umfangsbereich der Stirnplatte 40 sind ferner sechs Durchgangslöcher 170 ausgebildet, welche sich zwischen den Oberflächen der Stirnplatte 40 erstrecken und durch welche die Befestigungsbolzen 116 geführt werden.

### Bezugszeichenliste

- 2: - Dosierpumpe
- 4: - Reduktionsmitteltank
- 5: - Saugleitung
- 6: - Rückschlagventil
- 8: - Verzweigungspunkt
- 10: - Rücklaufleitung
- 12: - Absperrventil
- 14: - Drucksensor
- 16: - Druckleitung
- 18: - Mischbereich
- 20: - Rückschlagventil
- 22: - Leitung
- 24: - Druckluftversorgung
- 26: - Magnetventil
- 28: - Druckluftleitung
- 30: - Atmosphäre
- 32: - Druckregler
- 34: - Drossel
- 36: - Rückschlagventil
- 38: - Betätigungsleitung
- 39: - Vormischeinrichtung
- 40: - Zentralplatte
- 42: - Stirnplatte
- 44: - Hülse
- 46: - Außenwandung
- 48: - Einschnürung
- 50: - Stirnseite
- 52: - Ausnehmungen
- 54: - Kolben
- 55: - Kolbenstange

- 56: - O-Ring
- 58: - Stirnseite
- 60: - Druckfeder
- 62: - Führungshülse
- 64: - Federring
- 66: - Längsnuten
- 68: - O-Ring
- 70: - Manschette
- 72: - Kragen
- 74: - Spalt
- 76: - Ausnehmung
- 78: - Ausnehmung
- 80: - Frontplatte
- 82: - Einlassstutzen
- 84: - Ventilsitz
- 86: - Ventilelement
- 88: - Außenumfang des Ventilelements
- 90: - Träger
- 92: - elastisches Material
- 94: - Dichtfläche
- 96: - Führungshülse
- 98: - Durchbrechungen
- 100: - Druckfeder
- 102: - Kanal
- 104: - Oberfläche
- 106: - Ringkanal
- 108: - Zentralbereich
- 110: - Ausnehmung
- 112: - Befestigungseinrichtungen
- 114: - Öffnung
- 116: - Befestigungsbolzen
- 118, 120: - Dichtungselemente
- 122, 124, 126,128: - Anschlussöffnungen
- 130: - Drucklufteingang
- 132: - elektrischer Anschlussstecker
- 134, 136: - Durchgangslöcher
- 138, 140: - Ausnehmungen
- 142: - Kanal
- 144: - Durchgangsloch
- 146: - Kanal
- 148, 150: - Durchgangslöcher
- 152: - Kanal
- 154, 156: - Durchgangslöcher
- 158: - Ausnehmung
- 160, 162: - Durchgangslöcher
- 164: - Ausnehmung
- 166: - Durchgangsloch
- 168: - Ausnehmung
- 170: - Durchgangsloch
- D: - Grenze des Dosierpumpenaggregats

## Patentansprüche

1. Dosierpumpenaggregat zum Zumischen eines flüssigen Reduktionsmittels in einen Abgasstrom mit einer Dosierpumpe (2) zum Förden des Reduktionsmittels und einer Vormischeinrichtung (39), in welcher in einem Mischbereich (18) das von der Dosierpumpe (2) geförderte Reduktionsmittel mit einem Druckgas gemischt wird,
**dadurch gekennzeichnet, dass**
das Dosierpumpenaggregat einen Pumpenkopf mit einer Zentralplatte (40) aufweist, welche ein Bauteil bildet, in dem zumindest die Dosierpumpe (2) und die Vormischeinrichtung (39) integriert sind.

2. Dosierpumpenaggregat nach Anspruch 1, **dadurch gekennzeichnet, dass** zumindest ein Abschnitt eines Druckkanals (16) von der Dosierpumpe (2) zu der Vormischeinrichtung (39) in und/oder an der Zentralplatte (40) ausgebildet ist.

3. Dosierpumpenaggregat nach Anspruch 1 oder 2, **dadurch gekennzeichnet, dass** die Zentralplatte (40) mit einer ersten Oberfläche an einer Anlagefläche einer Frontplatte (80) eines Antriebsgehäuses des Dosierpumpenaggregates anliegt, wobei die Frontplatte (80) vorzugsweise an ihrer der Zentralplatte (40) abgewandten Seite den Antrieb der Dosierpumpe (2) trägt.

4. Dosierpumpenaggregat nach einem der vorangehenden Ansprüche, **dadurch gekennzeichnet, dass** an einer zweiten, vorzugsweise einem Antrieb der Dosierpumpe (2) abgewandten, Oberfläche der Zentralplatte (40) eine Stirnplatte (42) anliegt.

5. Dosierpumpenaggregat nach Anspruch 3 und/oder 4, **dadurch gekennzeichnet, dass** zwischen der ersten Oberfläche der Zentralplatte (40) und der Frontplatte (80) und/oder zwischen der zweiten Oberfläche der Zentralplatte (40) und der Stirnplatte (42) Fluidkanäle (142, 146, 152, 154) für die Führung des Reduktionsmittels und/oder des Druckgases ausgebildet sind.

6. Dosierpumpenaggregat nach Anspruch 4 oder nach Ansprüchen 4 und 5, **dadurch gekennzeichnet, dass** an der Stirnplatte (42) zumindest ein Fluidanschluss (122, 124, 126, 128) und vorzugsweise alle erforderlichen Fluidanschlüsse für das Druckgas, das Reduktionsmittel und/oder das Reduktionsmittel-Druckgas-Gemisch ausgebildet sind.

7. Dosierpumpenaggregat nach einem der vorangehenden Ansprüche, **dadurch gekennzeichnet, dass** die Dosierpumpe (2) als Membranpumpe ausgebildet ist und die Zentralplatte (40) an ihrer ersten Oberfläche eine das Pumpvolumen definierte Ausnehmung (140) aufweist, welche an der ersten Oberfläche durch die Pumpmembran verschlossen ist.

8. Dosierpumpenaggregat nach Anspruch 7, **dadurch gekennzeichnet, dass** im Bereich der Ausnehmung (140) in der Zentralplatte (40) zumindest ein sich zu der entgegengesetzten zweiten Oberfläche der Zentralplatte erstreckendes Durchgangsloch (134; 135) ausgebildet ist.

9. Dosierpumpenaggregat nach Anspruch 8, **dadurch gekennzeichnet, dass** in dem Durchgangsloch (134; 136) ein Rückschlagventil (6) angeordnet ist.

10. Dosierpumpenaggregat nach Anspruch 8 oder 9, **dadurch gekennzeichnet, dass** ein sich im Bereich der Ausnehmung (140) zu der entgegengesetzten zweiten Oberfläche erstreckendes Durchgangsloch (134) einen ausgangsseitig an die Dosierpumpe (2) anschließenden Druckkanal (16) bildet, welcher mit der Vormischeinrichtung (39) sowie einem in der Zentralplatte (40) angeordneten Rücklaufventil (12) verbunden ist.

11. Dosierpumpenaggregat nach Anspruch 10, **dadurch gekennzeichnet, dass** das Rücklaufventil (12) durch Druckgas betätigbar ist und über einen in der Zentralplatte (40) und/oder an zumindest einer Oberfläche der Zentralplatte (40) ausgebildeten Strömungsweg (162, 164) mit einem Druckgaseingang (128) verbunden ist.

12. Dosierpumpenaggregat nach Anspruch 11, **dadurch gekennzeichnet, dass** das Rücklaufventil (12) in eine an der zweiten Oberfläche der Zentralplatte (40) ausgebildete Ausnehmung (78) eingesetzt ist und vorzugsweise als Membranventil ausgebildet ist.

13. Dosierpumpenaggregat nach einem der vorangehenden Ansprüche, **dadurch gekennzeichnet, dass** die Vormischeinrichtung (39) über einen in der Zentralplatte (40) und/oder an zumindest einer Oberfläche der Zentralplatte (40) ausgebildeten Strömungsweg mit einem Druckgaseingang (128) verbunden ist.

14. Dosierpumpenaggregat nach einem der vorangehenden Ansprüche, **dadurch gekennzeichnet, dass** an der Zentralplatte (40) oder einer an einer der Oberflächen der Zentralplatte (40) anliegenden Platte (42, 80) ein Druckgaseingang (128) ausgebildet ist, welcher mit einem Schaltventil (25) zum Öffnen und Schließen des Druckgaseinganges (128) verbunden ist.

15. Dosierpumpenaggregat nach einem der Ansprüche 2 bis 14, **dadurch gekennzeichnet, dass** der Druckkanal (16) mit einem in der Zentralplatte (40) angeordneten Drucksensor (14) in Verbindung steht, dessen Anschlussleitungen sich vorzugsweise von der einem Antriebsgehäuse zugewandten Oberfläche der Zentralplatte (40) weg erstrecken.

16. Dosierpumpenaggregat nach einem der vorangehenden Ansprüche, **dadurch gekennzeichnet, dass** in der Zentralplatte (40), vorzugsweise an der einem Antriebsgehäuse zugewandten Oberfläche, eine Ausnehmung (168) für ein Heizelement ausgebildet ist.

17. Dosierpumpenaggregat nach einem der vorangehenden Ansprüche, **dadurch gekennzeichnet, dass** die Bewegungsrichtungen sämtlicher beweglicher Ventilelemente (86, 64, 70), welche in der Zentralplatte (40) angeordnet sind, parallel zueinander und vorzugsweise parallel zu der Bewegungsrichtung einer Pumpmembran sind.

18. Dosierpumpenaggregat nach einem der vorangehenden Ansprüche, **dadurch gekennzeichnet, dass** die Vormischeinrichtung (39) ein eine Mischkammer (18) definierendes Gehäuseteil (44) aufweist, welches in eine Ausnehmung (138) an einer, vorzugsweise einem Antrieb der Dosierpumpe (2) abgewandten, Oberfläche der Zentralplatte (40) eingesetzt ist.

## Claims

1. A metering pump assembly for admixing a fluid reduction agent into an exhaust gas flow with a metering pump (2) for delivering the reduction agent and with a premixing device (39), in which, in a mixing region (18), the reduction agent delivered by the metering pump (2) is mixed with a pressurised gas,
**characterised in that**
the metering pump assembly comprises a pump head with a central plate (40), which forms a component, in which at least the metering pump (2) and the premixing device (39) are integrated.

2. A metering pump assembly according to claim 1, **characterised in that** at least one section of a pressure channel (16) from the metering pump (2) to the premixing device (39) is formed in and/or on the central plate (40).

3. A metering pump assembly according to claim 1 or 2, **characterised in that** the central plate (40) with a first surface bears on a bearing surface of a front plate (80) of a drive housing of the metering pump assembly, wherein the front plate (80) preferably at its side distant to the central plate (40), carries the drive of the metering pump (2).

4. A metering pump assembly according to one of the preceding claims, **characterised in that** an end-plate (42) bears on a second surface of the central plate (40), said surface preferably being distant to a drive of the metering pump (2).

5. A metering pump assembly according to claim 3 and/or 4, **characterised in that** fluid channels (142, 146, 152, 154) for leading the reduction agent and/or the pressurised gas are formed between the first surface of the central plate (40) and the front plate (80) and/or between the second surface of the central plate (40) and the end-plate (42).

6. A metering pump assembly according to claim 4 or according to claims 4 and 5, **characterised in that** at least one fluid connection (122, 124, 126, 128) and preferably all required fluid connections for the pressurised gas, the reduction agent and/or the mixture of reduction agent / pressurised gas, are formed on the end-plate (42).

7. A metering pump assembly according to one of the preceding claims, **characterised in that** the metering pump (2) is designed as a membrane pump, and the central plate (40) on its first surface comprises a recess (140) which defines the pump volume and which is closed on the first surface by the pump membrane.

8. A metering pump assembly according to claim 7, **characterised in that** at least one through-hole (134; 135) extending to the opposite, second surface of the central plate is formed in the region of the recess (140) in the central plate (40).

9. A metering pump assembly according to claim 8, **characterised in that** a return valve (6) is arranged in the through-hole (134; 136).

10. A metering pump assembly according to claim 8 or 9, **characterised in that** a through-hole (134) which in the region of the recess (140) extends to the opposite second surface, forms a pressure channel (16) which connects at the exit side to the metering pump (2) and which is connected to the premixing device (39) as well as to a return valve (12) arranged in the central plate (40).

11. A metering pump assembly according to claim 10, **characterised in that** the return valve (12) may be actuated by pressurised gas and is connected to a pressurised gas entry (128) via a flow path (162, 164) formed in the central plate (40) and/or on at least one surface of the central plate (40).

12. A metering pump assembly according to claim 11, **characterised in that** the return valve (12) is applied into a recess (78) formed on the second surface of the central plate (40), and is preferably designed as a membrane valve.

13. A metering pump assembly according to one of the preceding claims, **characterised in that** the premixing device (39) is connected to a pressurised gas entry (128) via a flow path formed in the central plate (40) and/or on at least one surface of the central plate (40).

14. A metering pump according to one of the preceding claims, **characterised in that** a pressurised gas entry (128) is formed on the central plate (40) or on a plate (42, 80) bearing on one of the surfaces of the central plate (40), said pressured gas entry being connected to a switch-valve (25) for opening and closing the pressured gas entry (128).

15. A metering pump assembly according to one of the claims 2 to 14, **characterised in that** the pressure channel (16) is in connection with a pressure sensor (14) arranged in the central plate (40), the connection leads of the pressure sensor preferably extending away from the surface of the central plate (40), which faces the drive housing.

16. A metering pump assembly according to one of the preceding claims, **characterised in that** a recess (168) for a heating element is formed in the central plate (40), preferably on the surface facing a drive housing.

17. A metering pump assembly according to one of the preceding claims, **characterised in that** the movement directions of all moving valve elements (86, 64, 70) which are arranged in the central plate (40), are parallel to one another and preferably parallel to the movement direction of a pump membrane.

18. A metering pump assembly according to one of the preceding claims, **characterised in that** the premixing device (39) comprises a housing part (44) which defines a mixing chamber (18) and which is inserted into a recess (138) on a surface of the central plate (40), which is preferably distant to a drive of the metering pump (2).

## Revendications

1. Ensemble de pompe de dosage pour le mélange d'un agent réducteur liquide dans un courant d'échappement, comprenant une pompe de dosage (2) pour transporter l'agent réducteur et un dispositif de pré-mélange (39) dans lequel, à l'intérieur d'une zone de mélange (18), l'agent réducteur transporté par la pompe de dosage (2) est mélangé avec un gaz sous pression, **caractérisé en ce que** l'ensemble de pompe de dosage comporte une tête de pompe avec une plaque centrale (40), qui forme un élément de construction dans lequel sont intégrés au moins la pompe de dosage (2) et le dispositif de pré-mélange (39).

2. Ensemble de pompe de dosage selon la revendication 1, **caractérisé en ce qu'**au moins un segment d'un canal de pression (16) allant de la pompe de dosage (2) au dispositif de pré-mélange (39) est formé dans et/ou au niveau de la plaque centrale (40).

3. Ensemble de pompe de dosage selon la revendication 1 ou 2, **caractérisé en ce que** la plaque centrale (40) repose par une première surface contre une surface d'appui d'une plaque frontale (80) d'un carter d'entraînement de l'ensemble de pompe de dosage, la plaque frontale (80) supportant l'entraînement de la pompe de dosage (2), de préférence au niveau de son côté opposé à la plaque centrale (40).

4. Ensemble de pompe de dosage selon l'une des revendications précédentes, **caractérisé en ce qu'**une plaque avant (42) s'appuie contre une seconde surface de la plaque centrale (40), de préférence opposée à l'entraînement de la pompe de dosage (2).

5. Ensemble de pompe de dosage selon la revendication 3 et/ou 4, **caractérisé en ce qu'**entre la première surface de la plaque centrale (40) et la plaque frontale (80) et/ou qu'entre la deuxième surface de la plaque centrale (40) et la plaque avant (42) des canaux de fluide (142, 146, 152, 154) sont conçus pour guider l'agent réducteur et/ou le gaz sous pression.

6. Ensemble de pompe de dosage selon la revendication 4 ou selon les revendications 4 et 5, **caractérisé en ce qu'**au moins un raccord de fluide (122, 124, 126, 128) et de préférence tous les raccords de fluide nécessaires au gaz sous pression, à l'agent réducteur et/ou au mélange agent réducteur - gaz sous pression est ou sont formés au niveau de la plaque avant (42).

7. Ensemble de pompe de dosage selon l'une des revendications précédentes, **caractérisé en ce que** la pompe de dosage (2) est conçue sous forme d'une pompe à membrane et que la plaque centrale (40) comprend au niveau de sa première surface un évidement (140) définissant le volume de la pompe qui est fermé au niveau de la première surface par la membrane de la pompe.

8. Ensemble de pompe de dosage selon la revendication 7, **caractérisé en ce qu'**au moins un trou traversant (134 ; 135) s'étendant en direction de la seconde surface opposée de la plaque centrale est formé dans la zone de l'évidement (140) dans la plaque centrale (40).

9. Ensemble de pompe de dosage selon la revendication 8, **caractérisé en ce qu'**un clapet de non retour (6) est disposé dans le trou traversant (134 ; 136).

10. Ensemble de pompe de dosage selon la revendication 8 ou 9, **caractérisé en ce qu'**un trou traversant (134) s'étendant dans la zone de l'évidement (140) en direction de la deuxième surface opposée forme un canal de pression (16) se raccordant en sortie à la pompe de dosage (2), canal qui est relié au dispositif de pré-mélange (39) et à un clapet de retour (12) disposé dans la plaque centrale (40).

11. Ensemble de pompe de dosage selon la revendication 10, **caractérisé en ce que** le clapet de retour (12) peut être actionné par le gaz de pression et est relié à une entrée de gaz sous pression (128) par l'intermédiaire d'un chemin d'écoulement (162, 164) formé dans la plaque centrale (40) et/on au niveau d'au moins une surface de la plaque centrale (40).

12. Ensemble de pompe de dosage selon la revendication 11, **caractérisé en ce que** le clapet de retour (12) est logé dans un évidement (78) formé au niveau de la seconde surface de la plaque centrale (40) et se présente de préférence sous la forme d'une soupape à membrane.

13. Ensemble de pompe de dosage selon l'une des revendications précédentes, **caractérisé en ce que** le dispositif de pré-mélange (39) est relié à une entrée de gaz sous pression (128) par l'intermédiaire d'un chemin d'écoulement formé dans la plaque centrale (40) et/ou au niveau d'au moins une surface de la plaque centrale (40).

14. Ensemble de pompe de dosage selon l'une des revendications précédentes, **caractérisé en ce qu'**une entrée de gaz sous pression (128) est formée au niveau de la plaque centrale (40) ou d'une plaque (42, 80) s'appuyant contre l'une des surfaces de la plaque centrale (40), entrée qui est reliée à une soupape de commande (25) destinée à l'ouverture et à la fermeture de l'entrée de gaz sous pression (128).

15. Ensemble de pompe de dosage selon l'une des revendications 2 à 14, **caractérisé en ce que** le canal de pression (16) est relié à un capteur de pression (14) disposé dans la plaque centrale (40), dont les conduites de raccordement s'étendent de préférence depuis une surface de la plaque centrale (40) orientée vers un carter d'entraînement.

16. Ensemble de pompe de dosage selon l'une des revendications précédentes, **caractérisé en ce qu'**un évidement (168) est formé dans la plaque centrale (40) pour un élément de chauffage, de préférence au niveau de la surface orientée vers un carter d'entraînement.

17. Ensemble de pompe de dosage selon l'une des revendications précédentes, **caractérisé en ce que** les sens de mouvement de l'ensemble des éléments de soupape mobiles (86; 64, 70) disposés dans la plaque centrale (40) sont parallèles les uns aux autres et de préférence parallèles au sens de mouvement d'une membrane de pompe.

18. Ensemble de pompe de dosage selon l'une des revendications précédentes, **caractérisé en ce que** le dispositif de pré-mélange (39) comprend un élément de boîtier (44) définissant une chambre de mélange (18) qui vient s'insérer dans un évidement (138) au niveau d'une surface de la plaque centrale (40), de préférence opposée à un entraînement de la pompe de dosage (2).
